(19) Europäisches Patentamt
European Patent Office
Office européen des brevets

(11) **EP 2 566 087 B1**

(12) **EUROPEAN PATENT SPECIFICATION**

(45) Date of publication and mention
of the grant of the patent:
**14.12.2022 Bulletin 2022/50**

(21) Application number: **11775284.0**

(22) Date of filing: **28.04.2011**

(51) International Patent Classification (IPC):
**H04L 1/16** (2006.01)      **H04L 1/18** (2006.01)
**H04L 27/26** (2006.01)      **H04B 7/26** (2006.01)
**H04L 5/00** (2006.01)

(52) Cooperative Patent Classification (CPC):
**H04L 5/0055; H04L 1/1607; H04L 1/1861;**
**H04L 1/1896;** H04L 5/001; H04L 5/0019;
H04L 5/0021; H04L 5/0048

(86) International application number:
**PCT/KR2011/003143**

(87) International publication number:
**WO 2011/136579 (03.11.2011 Gazette 2011/44)**

(54) **METHOD AND APPARATUS FOR TRANSMITTING EXTENDED UPLINK ACKNOWLEDGEMENT INFORMATION IN A WIRELESS COMMUNICATION SYSTEM**

VERFAHREN UND VORRICHTUNG ZUR ÜBERTRAGUNG ERWEITERTER UPLINK-QUITTIERUNGSINFORMATIONEN IN EINEM DRAHTLOSEN KOMMUNIKATIONSSYSTEM

PROCÉDÉ ET APPAREIL D'ÉMISSION D'INFORMATIONS ÉTENDUES D'ACCUSÉ DE RÉCEPTION EN VOIE MONTANTE DANS UN SYSTÈME DE COMMUNICATIONS RADIO

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **28.04.2010 US 329079 P**

(43) Date of publication of application:
**06.03.2013 Bulletin 2013/10**

(73) Proprietor: **LG Electronics Inc.**
**Seoul 150-721 (KR)**

(72) Inventors:
• **AHN, Joon Kui**
**Anyang-si**
**Gyeonggi-do 431-080 (KR)**
• **YANG, Suck Chel**
**Anyang-si**
**Gyeonggi-do 431-080 (KR)**
• **KIM, Min Gyu**
**Anyang-si**
**Gyeonggi-do 431-080 (KR)**
• **SEO, Dong Youn**
**Anyang-si**
**Gyeonggi-do 431-080 (KR)**

(74) Representative: **Frenkel, Matthias Alexander et al**
**Wuesthoff & Wuesthoff**
**Patentanwälte PartG mbB**
**Schweigerstraße 2**
**81541 München (DE)**

(56) References cited:
**KR-A- 20050 078 640      KR-A- 20100 017 152**
**US-A1- 2009 196 229      US-A1- 2009 231 993**

• **HUAWEI: "Slot-based Cyclic Shift and Orthogonal Cover Re-mapping for UL ACK/NACK", 3GPP DRAFT; R1-080117, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Sevilla, Spain; 20080108, 8 January 2008 (2008-01-08), XP050108648, [retrieved on 2008-01-08]**

- **TEXAS INSTRUMENTS ET AL: "Coherent Uplink ACK/NAK Transmission with High Speed UEs", 3GPP DRAFT; R1-073429-18HSUE-ACKNAK, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Athens, Greece; 20070815, 15 August 2007 (2007-08-15), XP050107044, [retrieved on 2007-08-15]**

**Description**

**TECHNICAL FIELD**

The present invention relates to a wireless communication system, and more particularly, to a method of transmitting an extended acknowledgement information in a wireless communication system and apparatus for the same.

**BACKGROUND ART**

Uplink control information may consist of scheduling request, acknowledgement/non-acknowledgement (ACK/NACK) for a downlink (DL) transmission, a downlink channel state information and the like. In this case, ACK/NACK information on the DL transmission is control information fed back to a DL transmission entity by a DL reception entity in accordance with whether decoding of DL data is successful. In particular, if the DL reception entity successfully completes the decoding of the DL data, it may feed back the ACK information to the DL transmission entity. Otherwise, the DL reception entity may feed back the NACK information to the DL transmission entity.

Meanwhile, in order to support a bandwidth extended more than that of a related art, introduction of multiple carrier technology is taken into consideration. The multiple carrier technology may be called carrier aggregation technology. This carrier aggregation is the technology of brining an effect of using a logically wide frequency bandwidth by binding multiple carriers together in a frequency domain, whereas a single carrier is used by a general wireless communication system of a related art. If the multiple carrier technology is applied to a DL transmission, a plurality of DL data can be transmitted via a plurality of data channels on a plurality of DL carriers (or DL cells) at a specific time. Hence, a DL reception entity may be requested to feed back a plurality of ACK/NACK informations on a plurality of the DL data to a DL transmission entity.

Moreover, in TDD (time division duplex) system having a DL transceiving and a UL transceiving performed in different times (e.g., subframes), a plurality of ACK/NACK informations on a plurality of DL data transmitted in a plurality of DL subframes may be requested to be fed back.

US 2009/0196229 A1 relates to a transmission of information from a secondary to a primary node occurs in a plurality of N logical time durations. The transmission from the secondary to primary node in a wireless network is obtained using an orthogonal covering sequence and a second sequence. Embodiments of the present invention mitigate interference by calculating a first orthogonal covering (OC) index and a second OC index from an indicator received from a serving base station (NodeB). A first index n1 is derived and a second index n2 is derived using the first index n1. A first orthogonal covering (OC) index and a first cyclic shift (CS) is determined using the derived index n1. A second OC and a second CS is derived using the derived index n2. A first slot of a subframe is generated using the OC indexed by the first OC index and the first CS and a second slot of the subframe is generated using the OC indexed by the second OC index and the second CS.

The document (TEXAS INSTRUMENTS ET AL: "Coherent Uplink ACK/NAK Transmission with High Speed UEs"; 3GPP DRAFT; R1-073429) outlines an UL ACK/NAK channel allocation to accommodate 18 high speed UEs with similar BER performance. In the document it is described that the UL ACK/NAK channel is specified by a block spreading code and a cyclic shift of a CAZAC sequence.

**DISCLOSURE OF THE INVENTION**

**TECHNICAL TASK**

In a related art wireless communication system, when UL ACK/NACK information is transmitted on a physical uplink control channel, it is defined to transmit 1- or 2-bit ACK/NACK information only. Hence, as mentioned in the foregoing description, in order to transmit ACK/NACK information on a plurality of DL data in multi-carrier or TDD system, it may be necessary to define ACK/NACK transmission resource to use more bits for ACK/NACK information transmission.

The technical task of the present invention is to provide a method and apparatus for transmitting a plurality of UL ACK/NACK informations on a plurality of DL data via physical uplink control channel efficiently and accurately in a manner of defining a transmission scheme of extended ACK/NACK information.

Technical tasks obtainable from the present invention are non-limited the above-mentioned technical task. And, other unmentioned technical tasks can be clearly understood from the following description by those having ordinary skill in the technical field to which the present invention pertains.

**TECHNICAL SOLUTIONS**

The invention is defined by the appended claims 1-8.

## ADVANTAGEOUS EFFECTS

Accordingly, the present invention defines a transmission scheme of extended ACK/NACK information, thereby providing a method and apparatus for transmitting a plurality of UL ACK/NACK informations on a plurality of DL data via physical uplink control channel efficiently and accurately.

Effects obtainable from the present invention are non-limited by the above mentioned effect. And, other unmentioned effects can be clearly understood from the following description by those having ordinary skill in the technical field to which the present invention pertains.

## DESCRIPTION OF DRAWINGS

The accompanying drawings, which are included to provide a further understanding of the invention and are incorporated in and constitute a part of this application, illustrate embodiment(s) of the invention and together with the description serve to explain the principle of the invention.

FIG. 1 is a diagram for a structure of a radio frame;

FIG. 2 is a diagram for one example of a resource grid in a downlink slot.

FIG. 3 is a diagram for a structure of a downlink subframe.

FIG. 4 is a diagram for a structure of an uplink subframe.

FIG. 5 is a diagram to illustrate how PUCCH formats are mapped to PUCCH regions in uplink physical resource blocks.

FIG. 6 is a diagram for a structure of ACK/NACK channel in case of a normal CP.

FIG. 7 is a diagram to illustrate a case of transmitting both ACK/NACK information and SR simultaneously.

FIG. 8 is a diagram for a structure of CQI channel in case of a normal CP.

FIG. 9 is a diagram to describe a single carrier system and a multi-carrier system.

FIG. 10 is a diagram for one example of a multi-carrier system.

FIG. 11 is a diagram to describe dynamic activation/deactivation of DL carrier.

FIG. 12 is a diagram for one example of ACK/NACK channel selection.

FIG. 13 is a diagram to describe PUCCH resource allocable to one user equipment.

FIGs. 14 to 20 are diagrams for examples of allocating a plurality of PUCCH resources to one user equipment.

FIG. 21 is a flowchart to describe an extended ACK/NACK information transmitting method according to one embodiment of the present invention.

FIG. 22 is a diagram for configurations of a base station device and a user equipment device according to the present invention.

## BEST MODE FOR INVENTION

First of all, the following embodiments correspond to combinations of elements and features of the present invention in prescribed forms. And, the respective elements or features may be considered as selective unless they are explicitly mentioned. Each of the elements or features can be implemented in a form failing to be combined with other elements or features. Moreover, an embodiment of the present invention may be implemented by combining elements and/or features together in part. A sequence of operations explained for each embodiment of the present invention may be modifiable. Some configurations or features of one embodiment may be included in another embodiment or substituted with corresponding configurations or features of another embodiment.

In this specification, embodiments of the present invention are described centering on the data transmission/reception relations between a base station and a terminal. In this case, the base station may be meaningful as a terminal node of a network which directly performs communication with the terminal. In this disclosure, a specific operation explained as performed by a base station may be performed by an upper node of the base station in some cases. In particular, in a network constructed with a plurality of network nodes including a base station, it is apparent that various operations performed for communication with a terminal can be performed by a base station or other networks except the base station.

Moreover, in this document, 'base station (BS)' may be substituted with such a terminology as a fixed station, a Node B, an eNode B (eNB), an access point (AP) and the like. A relay may be substituted with such a terminology as a relay node (RN), a relay station (RS) and the like. And, 'terminal' may be substituted with such a terminology as a user equipment (UE), a mobile station (MS), a mobile subscriber station (MSS), a subscriber station (SS) and the like.

Specific terminologies used for the following description may be provided to help the understanding of the present invention. And, the use of the specific terminology may be modified into other forms within the scope of the technical idea of the present invention.

Occasionally, to prevent the present invention from getting vaguer, structures and/or devices known to the public may be skipped or represented as block diagrams centering on the core functions of the structures and/or devices. Wherever possible, the same reference numbers will be used throughout the drawings to refer to the same or like parts in this specification.

Embodiments of the present invention may be supported by the disclosed standard documents of at least one of wireless access systems including IEEE 802 system, 3GPP system, 3GPP LTE and LTE-A (LTE-Advanced) system and 3GPP2 system. In particular, the steps or parts, which are not explained to clearly reveal the technical idea of the present invention, in the embodiments of the present invention may be supported by the above documents. Moreover, all terminologies disclosed in this document may be supported by the above standard documents.

The following description of embodiments of the present invention may apply to various wireless access systems including CDMA (code division multiple access), FDMA (frequency division multiple access), TDMA (time division multiple access), OFDMA (orthogonal frequency division multiple access), SC-FDMA (single carrier frequency division multiple access) and the like. CDMA can be implemented with such a radio technology as UTRA (universal terrestrial radio access), CDMA 2000 and the like. TDMA can be implemented with such a radio technology as GSM/GPRS/EDGE (Global System for Mobile communications)/General Packet Radio Service/Enhanced Data Rates for GSM Evolution). OFDMA can be implemented with such a radio technology as IEEE 802.11 (Wi-Fi), IEEE 802.16 (WiMAX), IEEE 802.20, E-UTRA (Evolved UTRA), etc. UTRA is a part of UMTS (Universal Mobile Telecommunications System). 3GPP (3rd Generation Partnership Project) LTE (long term evolution) is a part of E-UMTS (Evolved UMTS) that uses E-UTRA. The 3GPP LTE adopts OFDMA in downlink (hereinafter abbreviated) DL and SC-FDMA in uplink (hereinafter abbreviated UL). And, LTE-A (LTE-Advanced) is an evolved version of 3GPP LTE. WiMAX may be explained by IEEE 802.16e standard (e.g., WirelessMAN-OFDMA reference system) and advanced IEEE 802.16m standard (e.g., WirelessMAN-OFDMA advanced system). For clarity, the following description mainly concerns 3GPP LTE system or 3GPP LTE-A system, by which the technical idea of the present invention may be non-limited.

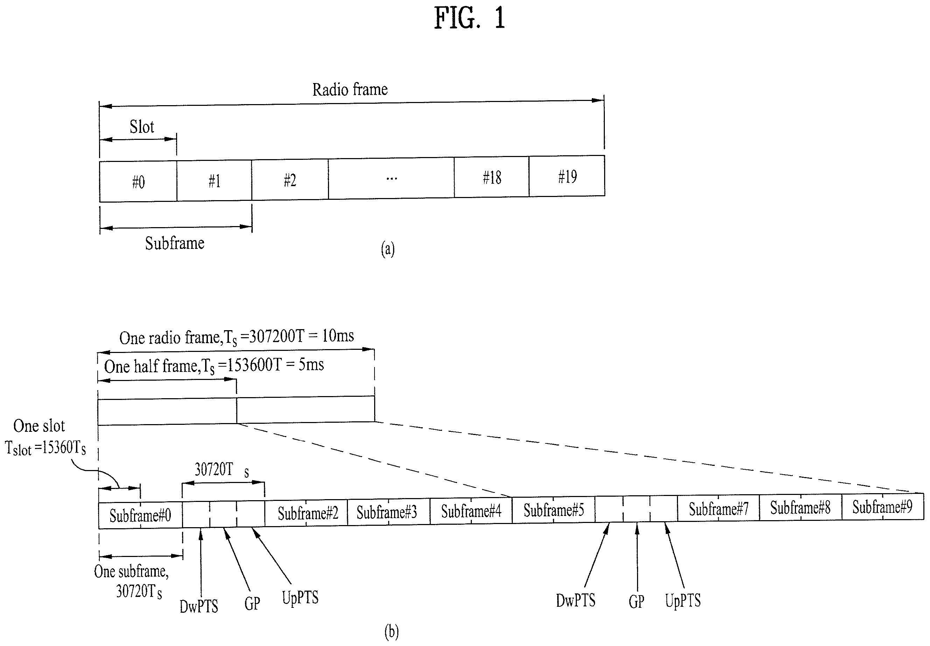

A structure of a downlink (DL) radio frame is described with reference to FIG. 1 as follows. In a cellular OFDM radio packet communication system, UL/DL (uplink/downlink) data packet transmission is performed by a unit of subframe. And, one subframe is defined as a predetermined time interval including a plurality of OFDM symbols. In the 3GPP LTE standard, a type-1 radio frame structure applicable to FDD (frequency division duplex) and a type-2 radio frame structure applicable to TDD (time division duplex) are supported.

FIG. 1 (a) is a diagram for a structure of a downlink radio frame of type 1. A DL (downlink) radio frame includes 10 subframes. Each of the subframes includes 2 slots. And, a time taken to transmit one subframe is defined as a transmission time interval (hereinafter abbreviated TTI). For instance, one subframe may have a length of 1 ms and one slot may have a length of 0.5 ms. One slot may include a plurality of OFDM symbols in time domain or may include a plurality of resource blocks (RBs) in frequency domain. Since 3GPP system uses OFDMA in downlink, OFDM symbol indicates one symbol duration. The OFDM symbol may be named SC-FDMA symbol or symbol duration. Resource block (RB) is a resource allocation unit and may include a plurality of contiguous subcarriers in one slot.

The number of OFDM symbols included in one slot may vary in accordance with a configuration of CP. The CP may be categorized into an extended CP and a normal CP. For instance, in case that OFDM symbols are configured by the normal CP, the number of OFDM symbols included in one slot may be 7. In case that OFDM symbols are configured by the extended CP, since a length of one OFDM symbol increases, the number of OFDM symbols included in one slot may be smaller than that of the case of the normal CP. In case of the extended CP, for instance, the number of OFDM symbols included in one slot may be 6. If a channel status is unstable (e.g., a UE is moving at high speed), it may be able to use the extended CP to further reduce the inter-symbol interference.

When a normal CP is used, since one slot includes 7 OFDM symbols, one subframe includes 14 OFDM symbols. In this case, first 2 or 3 OFDM symbols of each subframe may be allocated to PDCCH (physical downlink control channel), while the rest of the OFDM symbols are allocated to PDSCH (physical downlink shared channel).

FIG. 1 (b) is a diagram for a structure of a downlink radio frame of type 2. A type-2 radio frame includes 2 half frames. Each of the half frame includes 5 subframes, DwPTS (downlink pilot time slot), GP (guard period) and UpPTS (uplink pilot time slot) . And, one of the subframes includes 2 slots. The DwPTS is used for initial cell search, synchronization or channel estimation in a user equipment. The UpPTS is used for channel estimation in a base station and uplink transmission synchronization of a user equipment. The guard period is a period for eliminating interference generated in uplink due to multi-path delay of a downlink signal between uplink and downlink.

The above-described structures of the radio frame are just exemplary. And, the number of subframes included in a radio frame, the number of slots included in the subframe and the number of symbols included in the slot may be modified in various ways.

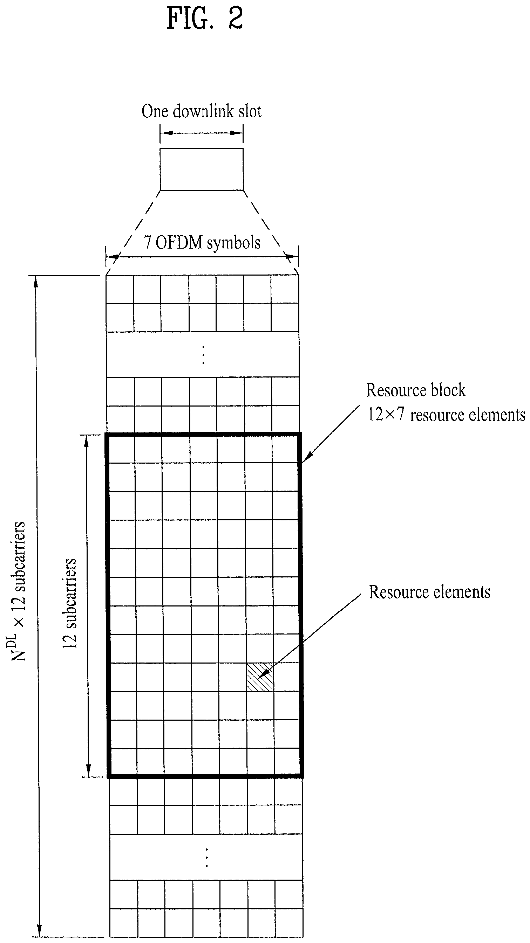

FIG. 2 is a diagram for one example of a resource grid for a downlink (DL) slot. One downlink (DL) slot may include 7 OFDM symbols in time domain and one resource block (RB) may include 12 subcarriers in frequency domain, by which the present invention may be non-limited. For instance, in case of a normal cyclic prefix (CP), one slot includes 7 OFDM symbols. Yet, in case of an extended CP, one slot may include 6 OFDM symbols. Each element on a resource grid may be named a resource element (hereinafter abbreviated RE). One resource block includes $12 \times 7$ resource

elements. The number $N^{DL}$ of resource blocks included in a DL slot may depend on a DL transmission bandwidth. And, the structure of an uplink (UL) slot may be identical to that of the DL slot.

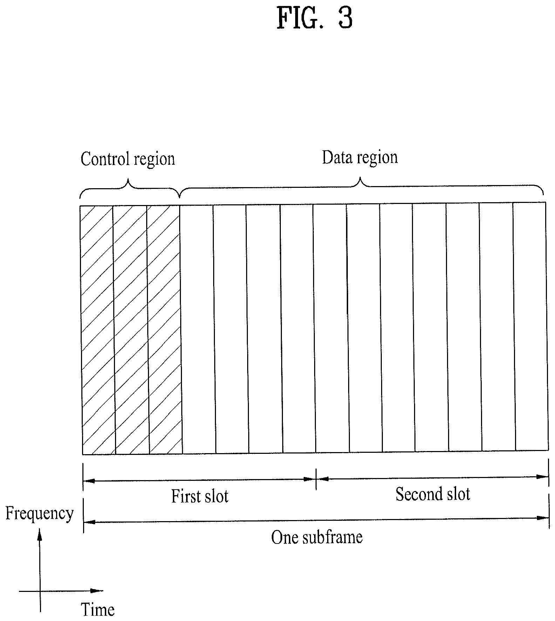

FIG. 3 is a diagram for a structure of a downlink (DL) subframe. Maximum 3 OFDM symbols situated in a head part of a first slot of one subframe correspond to a control region to which a control channel is allocated. The rest of OFDM symbols correspond to a data region to which PDSCH (physical downlink shared channel) is allocated. A basic unit of transmission becomes one subframe. In particular, PDCCH and PDSCH are assigned across 2 slots. Examples of DL control channels used by 3GPP LTE system may include PCFICH (Physical Control Format Indicator Channel), PDCCH (Physical Downlink Control Channel), PHICH (Physical hybrid automatic repeat request indicator Channel) and the like. The PCFICH is transmitted in a first OFDM symbol of a subframe and includes information on the number of OFDM symbols used for a transmission of a control channel within the subframe. The PHICH includes HARQ ACK/NACK signal in response to a UL transmission. Control information carried on PDCCH may be called downlink control information (DCI).

The DCI may include UL or DL scheduling information or a UL transmission power control command for a random UE (user equipment) group. The PDCCH may include transmission format and resource allocation information of DL-SCH (downlink shared channel), resource allocation information on UL-SCH (uplink shared channel), paging information on PCH (paging channel), system information on DL-SCH, resource allocation of such a higher layer control message as a random access response transmitted on PDSCH, transmission power control command set for individual UEs within a random UE group, transmission power control information, activation of VoIP (voice over IP) and the like. A plurality of PDCCHs can be transmitted within the control region. A user equipment may be able to monitor a plurality of the PDCCHs. The PDCCH is transmitted as an aggregation of at least one or more contiguous CCEs (control channel elements). The CCE is a logical allocation unit used to provide the PDCCH at a coding rate based on a radio channel status. The CCE may correspond to a plurality of REGs (resource element groups). A format of the PDCCH and the number of available PDCCH bits may be determined in accordance with correlation between the number of CCEs and a coding rate provided by the CCE. A base station determines a PDCCH format in accordance with a DCI which is to be transmitted to a user equipment and attaches a CRC (cyclic redundancy check) to control information. The CRC is masked with an identifier named RNTI (radio network temporary identifier) in accordance with an owner or usage of the PDCCH. For instance, if the PDCCH is provided for a specific user equipment, the CRC may be masked with an identifier (e.g., cell-RNTI (C-RNTI)) of the corresponding user equipment. In case that the PDCCH is provided for a paging message, the CRC may be masked with a paging indicator identifier (e.g., P-RNTI). If the PDCCH is provided for system information (particularly, for a system information block (SIC)), the CRC may be masked with a system information identifier and a system information RNTI (SI-RNTI). In order to indicate a random access response to a transmission of a random access preamble of a user equipment, the CRC may be masked with RA-RNTI (random access-RNTI).

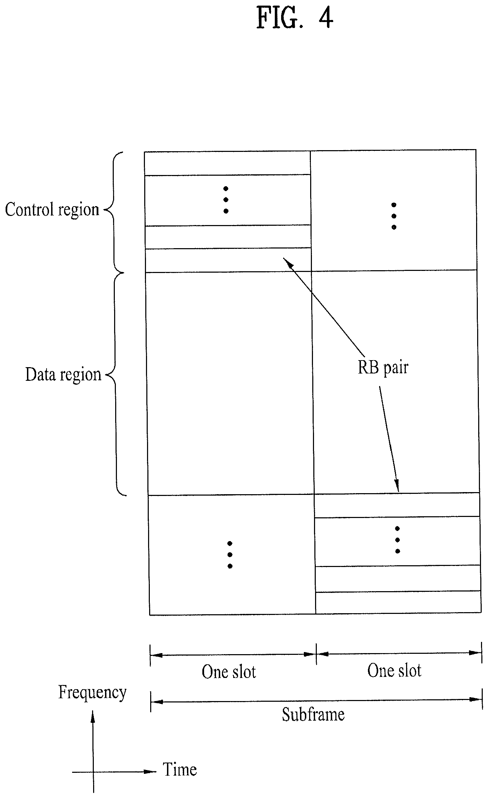

FIG. 4 is a diagram for a structure of an uplink (UL) subframe. A UL subframe may be divided into a control region and a data region in frequency domain. A physical UL control channel (PUCCH) including UL control information may be allocated to the control region. And, a physical UL shared channel (PUSCH) including user data may be allocated to the data region. In order to maintain single carrier property, one user equipment does not transmit PUCCH and PUSCH simultaneously. PUCCH for one user equipment may be allocated to a resource block pair (RB pair) in subframe. Resource blocks belonging to the resource block pair may occupy different subcarriers for 2 slots. Namely, a resource block pair allocated to PUCCH is frequency-hopped on a slot boundary.

**Physical Uplink Control Channel (PUCCH)**

Physical uplink control channel (PUCCH) is the channel that carries uplink (UP) control channel. Various kinds of PUCCH formats are defined by depending on a type of control information contained in PUCCH, a modulation scheme, a size of the control information and the like.

Control signaling information carried on PUCCH may include scheduling request (SR), HARQ ACK/NACK information and downlink (DL) channel measurement information.

HARQ ACK/NACK information may be generated by depending on whether decoding of UL data packet on PDSCH is successfully completed. In a conventional wireless communication system, 1 bit is transmitted as ACK/NACK information for a DL single codeword transmission or 2 bits are transmitted as ACK/NACK information for a DL 2-codeword transmission.

Channel measurement information means feedback information related to MIMO (multiple input multiple output) scheme and may include a channel quality indicator (CQI), a precoding matrix index IPMI) and a rank indicator (RI). Theses channel measurement information may be commonly represented as CQI. For the transmission of CQI, 20 bits per subframe may be used.

PUCCH may be modulated using BPSK (binary phase shift keying) and QPSK (quadrature phase shift keying). Control information on a plurality of user equipments may be transmitted on PUCCH. When Code Division Multiplexing (CDM) is performed in order to identify signals of a plurality of the user equipments, 12 CAZAC (Constant Amplitude Zero Autocorrelation) sequences are mainly used. Since CAZAC sequence has the property of maintaining a constant amplitude in time domain or frequency domain, the CAZAC sequence is most appropriate for decreasing a PAPR (Peak-to-Average Power Ratio) or CM (Cubic Metric) of a user equipment so as to increase a coverage. And, ACK/NACK information on a transmission of downlink data, which is transmitted on PUCCH, may be covered using an orthogonal sequence.

Control information transmitted on PUCCH may be identified using cyclically shifted sequences including different cyclic shift values. The cyclically shifted sequence may be generated by cyclically shifting a base sequence by a specific CS (cyclic shift) amount. The specific CS amount is indicated by a cyclic shift (CS) index. The number of available cyclic shifts may vary by depending upon a delay spread of a channel. One of sequences of various types may be used as the base sequence. And, the aforementioned CAZAC sequence is one example of those sequences.

A size of control information, which can be transmitted in one subframe by a user equipment, may be determined in accordance with the number of SC-FDMA symbols (i.e., SC-FDMA symbols except SC-FDMA symbol used for a reference signal (RS) transmission for a coherent detection of PUCCH) available for a transmission of the control information.

In 3GPP LTE system, PUCCH is defined by total 7 kinds of different formats in accordance with a transmitted control information, a modulation scheme, a control information size and the like and attributes of uplink control information (UCI) transmitted by each of the PUCCH formats may be summarized as Table 1 below.

**[Table 1]**

| PUCCH format | Modulation scheme | Number of bits per subframe | Usage | etc. |
|---|---|---|---|---|
| 1 | N/A | N/A | SR(Scheduling Request) | |
| 1a | BPSK | 1 | ACK/NACK | One codeword |
| 1b | QPSK | 2 | ACK/NACK | Two codeword |
| 2 | QPSK | 20 | CQI | Joint Coding ACK/NACK (extended CP) |
| 2a | QPSK+BPSK | 21 | CQI+ACK/NACK | Normal CP only |
| 2b | QPSK+BPSK | 22 | CQI+ACK/NACK | Normal CP only |

PUCCH format 1 is used for an independent transmission of SR (scheduling request). In case of the SR independent transmission, a non-modulated waveform is applicable. This shall be described in detail later.

PUCCH format 1a or PUCCH format 1b is used for a transmission of HARQ ACK/NACK. In case that HARQ ACK/NACK is independently transmitted in a random subframe, it may be able to use PUCCH format 1a or PUCCH format 1b. Moreover, both HARQ ACK/NACK may be transmitted in a same subframe using PUCCH format 1a or PUCCH format 1b.

PUCCH format 2 is used for a transmission of CQI. PUCCH format 2a or PUCCH format 2b is used for a transmission of CQI and HARQ ACK/NACK. In case of an extended CP, PUCCH format 2 may be available for a transmission of CQI and HARQ/NACK.

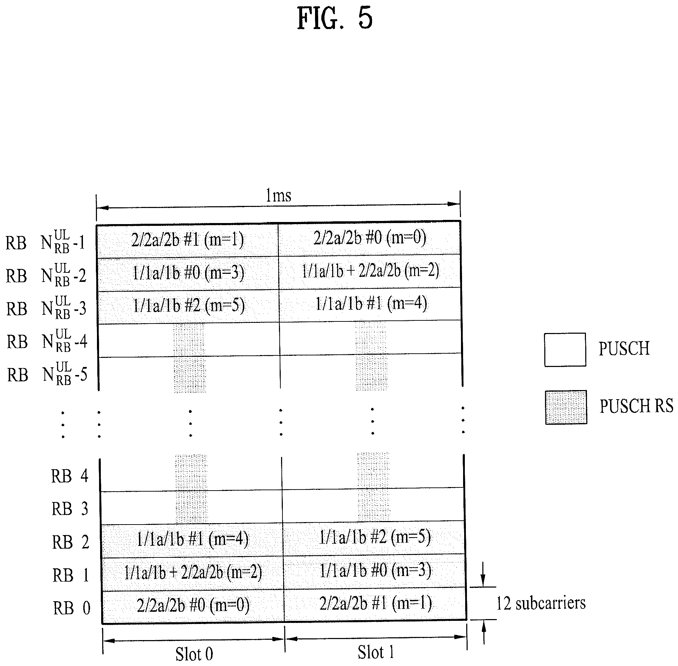

FIG. 5 shows a configuration of mapping PUCCH formats to PUCCH regions in an uplink (UL) physical resource block. In FIG. 5, the $N_{RB}^{UL}$ indicates the number of resource blocks in UL and 0, 1, ... or $N_{RB}^{UL}-1$ means a physical resource block number. Basically, PUCCH is mapped to both side edges of a UL frequency block. Referring to FIG. 5, PUCCH format 2/2a/2b is be mapped to PUCCH regions indicated as 'm = 0, 1', which can be represented as PUCCH format 2/2a/2b is mapped to resource blocks situated on a band edge. And, both PUCCH format 2/2a/2b and PUCCH format 1/1a/1b may be mixedly mapped to PUCCH region indicated as 'm = 2'. Moreover, PUCCH format 1/1a/1b may be mapped to PUCCH regions indicated as 'm = 3, 4, 5'. The number ($N^{(2)}_{RB}$) of PUCCH RBs available by PUCCH format 2/2a/2b may be notified to user equipments within a cell by broadcasting signaling.

In the following description, PUCCH formats are explained in detail.

Prior to the description of PUCCH format 1, PUCCH format 1a and PUCCH format 1b are described as follows. PUCCH format 1a/1b is a control channel used for ACK/NACK transmission.

In PUCCH format 1a/1b, a symbol modulated by BPSK or QPSK modulation scheme may be multiplied by a CAZAC sequence having a length of 12. After completion of the CAZAC sequence multiplication, it is spread with an orthogonal sequence block-wise. Hadamard sequence having a length of 4 is used for normal ACK/NACK information.

DFT (discrete Fourier transform) sequence having a length of 3 is used for shortened ACK/NACK information and reference signal. Hadamard sequence having a length of 2 is used for a reference signal in case of an extended CP.

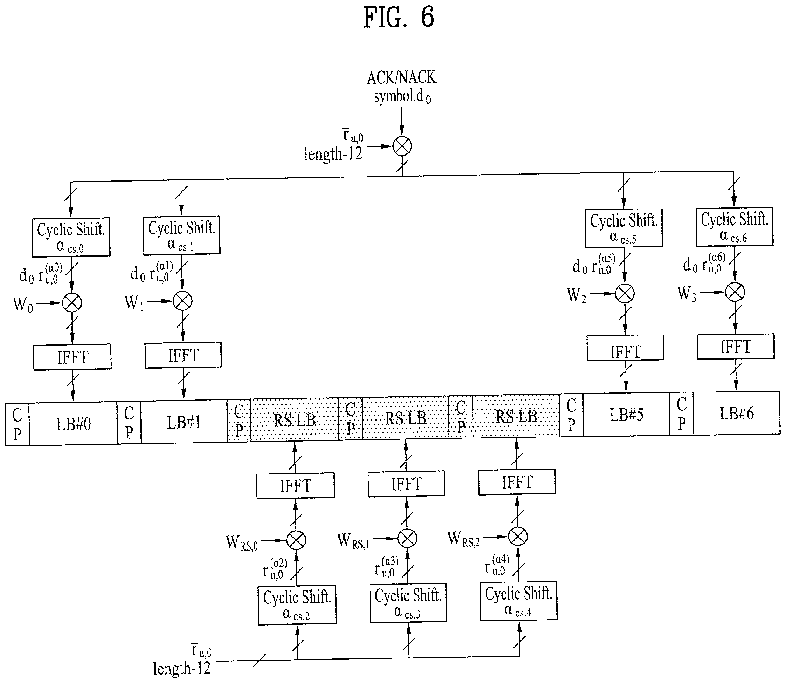

FIG. 6 shows a structure of ACK/NACK channel in case of a normal CP. A reference signal (RS) is carried on 3 contiguous SC-FDMA symbols of a middle part in 7 OFDM symbols included in one slot and an ACK/NACK signal is carried on the 4 remaining SC-FDMA symbols. Meanwhile, in case of an extended CP, RS may be carried on 2 contiguous symbols of a middle part. The number and positions of symbols used for RS may vary in accordance with a control channel and the number and positions of symbols used for an associated ACK/NACK signal may vary correspondingly.

1-bit ACK/NACK information (unscrambled) may be represented as one HARQ ACK/NACK modulated symbol using BPSK scheme. And, 2-bit ACK/NACK information (unscrambled) may be represented as one HARQ ACK/NACK modulated symbol using QPSK scheme. Acknowledgement (ACK) may be represented as '1', while Negative acknowledgement (NACK) may be represented as '0'.

When a control signal is transmitted within an allocated band, 2-dimensional spreading may be applicable to increase multiplexing capacity. In particular, both frequency domain spread and time domain spread are simultaneously applied to increment the number of user equipments, which can be multiplexed, or the number of control channels. In order to spread ACK/NACK signal in frequency domain, a frequency domain sequence may be used as a base sequence. Zadoff-Chu (ZC) sequence corresponding to one of CAZAC sequences may be used as a frequency domain sequence. For instance, if different cyclic shifts (CS) are applied to ZC sequence as a basic sequence, it may be able to apply multiplexing of different user equipments or control channels. The number of CS resources supported by SC-FDMA symbol for PUCCH RBs provided for HARQ ACK/NACK transmission is set by a cell-specific upper-layer signaling parameter ( $\Delta_{shift}^{PUCCH}$ ), and $\Delta_{shift}^{PUCCH} \in \{1, 2, 3\}$ indicates 12 shifts, 6 shifts or 4 shifts.

The frequency-domain-spread ACK/NACK signal undergoes IFFT and is then spread in time domain using an orthogonal spreading code. In particular, Walsh-Hadamard or DFT sequence may be usable as the orthogonal spreading code. For instance, ACK/NACK signal may be spread using an orthogonal sequence (w0, w1, w2, w3) having a length of 4 for 4 symbols. And, RS may be spread through an orthogonal sequence having a length of 3. This may be called orthogonal covering (OC).

A plurality of user equipments may be multiplexed by CDM (code division multiplex) using CS resources in frequency domain and OC resources in time domain mentioned in the foregoing description. In particular, ACK/NACK informations and RSs of a number of user equipments may be multiplexed together on the same PUCCH RB.

For this Time domain spreading CDM, the number of spreading codes supported for ACK/NACK information is limited by the number of RS symbols. In particular, since the number of RS transmission SC-FDMA symbols is smaller than that of ACK/NACK information transmission SC-FDMA symbols, multiplexing capacity of RS becomes smaller than that of ACK/NACK information. For instance, as ACK/NACK information may be carried on 4 symbols in case of a normal CP, 3 orthogonal spreading codes as used for the ACK/NACK information instead of 4 orthogonal spreading codes. This is because 3 orthogonal spreading codes are available for RS only due to the RS transmission symbols of which number is limited to 3.

Examples of sequences used for the spread of ACK/NACK information may be shown in Table 2 and Table 3. Table 2 shows a sequence for a length-4 symbol. Table 3 shows a sequence for a length-3 symbol. A sequence for a length-4 symbol may be used for PUCCH format 1/1a/1b of a general subframe configuration. In consideration of a case that SRS (sounding reference signal) is transmitted on a last symbol of a 2nd slot in a subframe configuration, a sequence for a length-4 symbol may be applied to a 1st slot and a shortened PUCCH format 1/1a/1b of a sequence for a length-3 symbol may be applied to a 2nd slot.

[Table 2]

| Sequence Index | [w(0), w(1), w(2), w(3)] |
|---|---|
| 0 | [+1 +1 +1 +1] |
| 1 | [+1 -1 +1 -1] |
| 2 | [+1 -1 -1 +1] |

[Table 3]

| Sequence Index | [w(0), w(1), w(2)] |
|---|---|
| 0 | [1 1 1] |
| 1 | [1 $e^{j2\pi/3}$ $e^{j4\pi/3}$] |

(continued)

| Sequence Index | [w(0), w(1), w(2)] |
|---|---|
| 2 | [1 $e^{j4\pi/3}$ $e^{j2\pi/3}$] |

Meanwhile, one example of an orthogonal sequence used for a spread of RS of ACK/NACK channel is shown in Table 4.

[Table 4]

| Sequence Index | Normal CP | Extended CP |
|---|---|---|
| 0 | [1 1 1] | [1 1] |
| 1 | [1 $e^{j2\pi/3}$ $e^{j4\pi/3}$] | [1 -1] |
| 2 | [1 $e^{j4\pi/3}$ $e^{j2\pi/3}$] | N/A |

When 3 symbols are used for RS transmission in one slot of a subframe of a normal CP and 4 symbols are used for ACK/NACK information transmission therein, assuming that 6 cyclic shifts (CS) in frequency domain and 3 orthogonal spreading (OC) resources in time domain are available for example, HARQ ACK/NACK's from total 18 different user equipments may be multiplexed together within one PUCCH RB.

In the following description, PUCCH format 1 is explained. Scheduling request (SR) is transmitted in a manner that a user equipment requests to be scheduled or does not request to be scheduled. SR channel reuses ACK/NACK channel structure in PUCCH format 1a/1b and is configured by OOK (on-off keying) scheme based on ACK/NACK channel design. A reference signal is not transmitted on SR channel. Hence, a sequence having a length of 7 is used for a normal CP. And, a sequence having a length of 6 is used for an extended CP. Different cyclic shifts or orthogonal covers may be applied to SR and ACK/NACK, respectively.

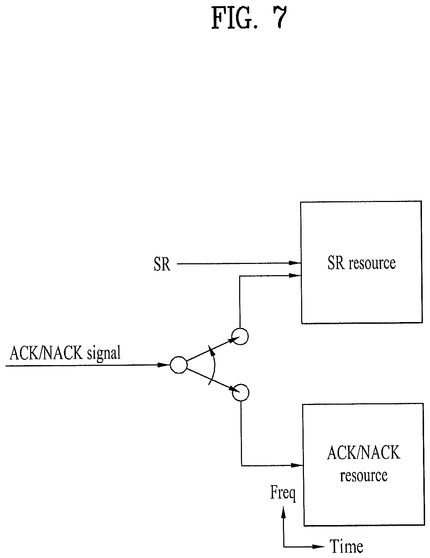

With reference to FIG. 7, a case of transmitting ACK/NACK information and SR simultaneously is described as follows. As mentioned in the foregoing description, a user equipment may be able to transmit HARQ ACK/NACK and SR in a same subframe. For a positive SR transmission, a user equipment transmits HARQ ACK/NACK on a resource allocated for SR. For a negative SR transmission, a user equipment transmits HARQ ACK/NACK on a resource allocated for ACK/NACK.

In the following description, PUCCH format 2/2a/2b is explained. PUCCH format 2/2a/2b is a control channel to transmit channel measurement feedback (CQI, PMI, RI).

A reporting cycle of channel measurement feedback (hereinafter, commonly called CQI information) and a frequency unit (or a frequency resolution) becoming a measurement target may be controlled by a base station. In time domain, periodic CQI reporting and aperiodic CQI reporting may be supported. PUCCH format 2 is used for the periodic reporting only, while PUSCH may be available for the aperiodic reporting. In case of the aperiodic reporting, a base station may instruct a user equipment to transmit an individual CQI report in a manner that the individual CQI report is loaded on a resource scheduled for UL data transmission.

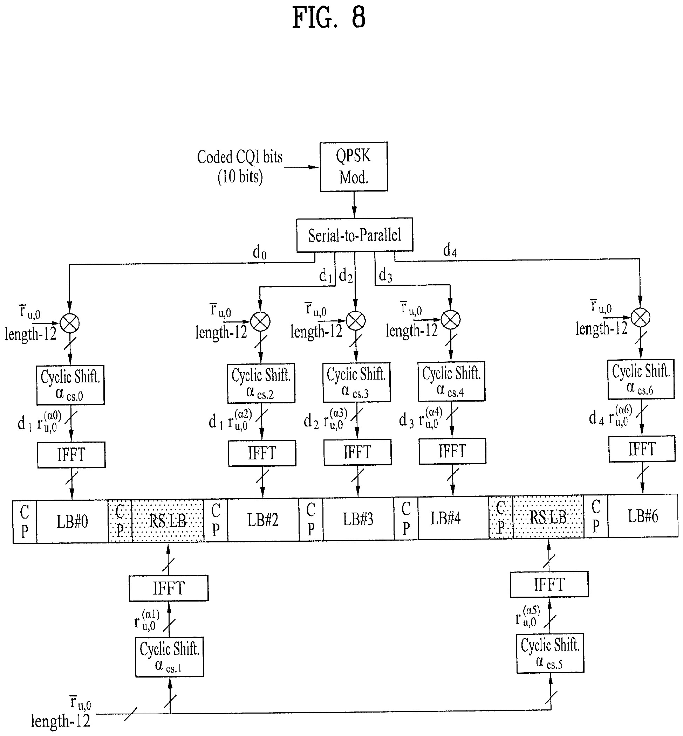

FIG. 8 shows a structure of CQI channel in case of a normal CP. Among SC-FDMA symbols of one slot, SC-FDMA symbol 1 (i.e., 2nd symbol) and SC-FDMA symbol 5 (i.e., 6th symbol) are used for DMRS (demodulation reference signal) transmission and CQI information may be transmitted in the rest of the SC-FDMA symbols. On the other hand, in case of an extended CP, one SC-FDMA symbol (i.e., SC-FDMA symbol 3) is used for the DMRS transmission.

According to PUCCH format 2/2a/2b, modulation by CAZAC sequence is supported and a QPSK modulated symbol is multiplied by CAZAC sequence having a length of 12. A cyclic shift of a sequence may be changed between a symbol and a sot. Orthogonal covering is used for DMRS.

Reference signals (DMRS) are loaded on 2 SC-FDMA symbols spaced apart from each other by an interval of 3 SC-FDMA symbols among 7 SC-FDMA symbols included in one slot, while CQI information is carried on the 5 remaining SC-FDMA symbols. Two reference signals (RSs) are used within one slot to support a high-speed user equipment. Each user equipment may be identifiable using a sequence. CQI information symbols are modulated and delivered to all SC-FDMA symbols. And, SC-FDMA symbols include one sequence. In particular, a user equipment modulates CQI with each sequence and then transmits the modulated CQI.

The number of symbols transmittable in one TTI is 10 and modulation of CQI information is determined up to QPSK. When QPSK mapping is used for SC-FDMA symbol, since 2-bit CQI value may be carried, 10-bit CQI value may be carried on one slot. Hence, maximum 20-bit CQI value may be carried on one subframe. In order to spread CQI information in frequency domain, frequency domain spreading code is used.

CAZAC sequence (e.g., ZC sequence) of a length-12 may be used as a frequency domain spreading code.

Each control channel may be identifiable in a manner of applying CAZAC sequence having a different cyclic shift value. IFFT is performed on the frequency-domain-spread CQI information.

By cyclic shift having 12 equivalent intervals, 12 different user equipments can be orthogonally multiplexed together on the same PUCCH RB. In cased of a normal CP, although DMRS sequence on SC-FDMA symbol 1 or 5 (or, SC-FDMA symbol 3 in case of an extended CP) is similar to a CQI signal sequence in frequency domain, the same modulation of CQI information is not applied. A user equipment may be semi-statically settable by an upper layer signaling to periodically report different CQI, PMI and RI types on PUCCH resource indicated by a PUCCH resource index (

$n_{PUCCH}^{(2)}$ ). In this case, the PUCCH resource index is the information that indicates a PUCCH region used for PUCCH format 2/2a/2b and a cyclic shift (CS) value to be used.

Carrier Aggregation

An advanced OFDMA based mobile communication system is considering an introduction of carrier aggregation (hereinafter abbreviated CA) technology. And, this CA technology means the technology that can achieve a high data transmission rate in a manner of performing UL/DL transmission using at least one carrier (e.g., component carrier (CC), cell, etc.) individually designated to DL or UL) simultaneously. A system having carrier aggregation applied thereto may be represented as a multi-carrier system. In the following description, a UL carrier, which becomes a target of carrier aggregation, may be schematically represented as UL CC or UL cell, while a DL carrier may be schematically represented as DL CC or DL cell.

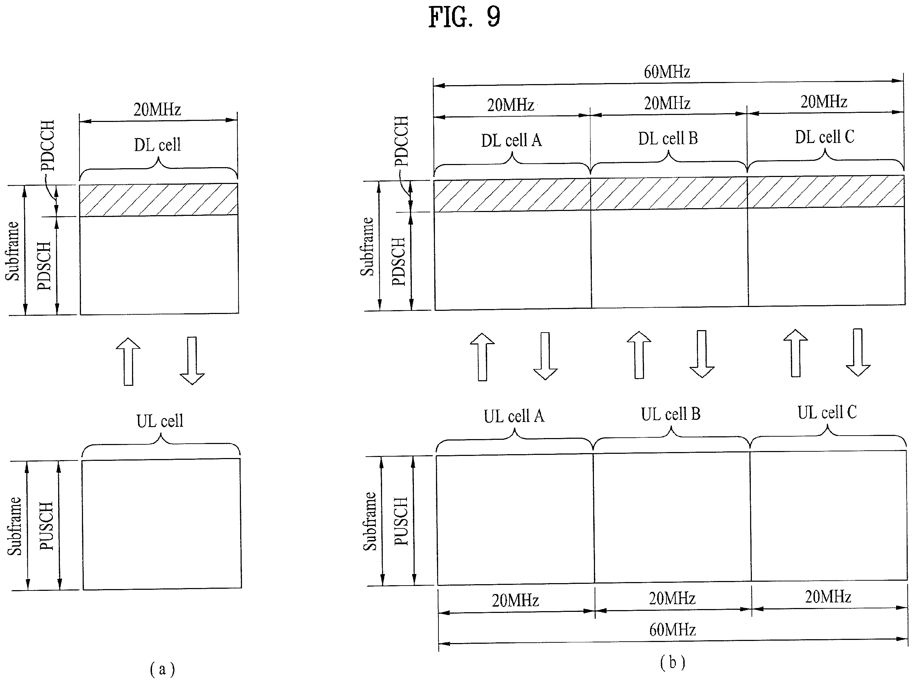

FIG. 9 is a diagram to describe a single carrier system and a multi-carrier system. FIG. 9 (a) shows DL subframe structure and UL subframe structure in a single carrier system of a related art. FIG. 9 (b) shows DL subframe structure and UL subframe structure in a multi-carrier system having 3 component carriers (CC) or cells aggregated together.

Referring to FIG. (b), a user equipment may be able to monitor and receive DL signal/data on a plurality of DL cells. Yet, although a base station manages N DL cells, if a network configures M DL cells (where, $M \leq N$) for a user equipment, a DL signal/data monitoring operation performed by the user equipment may be limited to M DL cells. Moreover, in case that a network configures L DL cell(s) (where, $L \leq M \leq N$)as main DL cell(s), a user equipment may be able to preferentially perform monitoring/reception of DL signal/data on the L DL cells. These L DL cell(s) may be represented as DL primary cell (DL P-cell) or DL anchor cell. And, the DL P-cell may be configured UE-specifically or cell-specifically.

Cross-carrier scheduling may be applicable to a user equipment capable of operating in a multi-carrier supportive system. In particular, the cross-carrier scheduling means a case that scheduling control information of PDSCH transmission on DL cell B is transmitted on PDCCH of DL cell A instead of PDCCH of the DL cell B. Assuming that a linkage between DL cell A and UL cell A is configured and that a linkage between DL cell B and UL cell B is configured, the cross-carrier scheduling means a case that scheduling control information of PUSCH transmission on UL cell B is transmitted on PDCCH of DL cell A instead of PDCCH of the DL cell B linked to the UL cell B.

In case of the cross-carrier scheduling, it may be able to consider applying a carrier indicator field (CIF). In a multi-carrier supportive system, the basic principle of PDCCH transmission is described in the following and the configuration of a presence or non-presence of CIF in PDCCH may be configured semi-statically and UE-specifically by an upper layer signaling.

First of all, in case that a CIF is disabled, PDSCH transmission resource allocation information on a prescribed DL cell and PUSCH transmission resource allocation information on UL cell linked with the corresponding DL cell may be provide via PDCCH on the same DL cell. In this case, CIF is not applicable and PDCCH structure (e.g., coding, CCE-based resource mapping, etc.) and DCI formats defined in the legacy 3GPP LTE release-8 system may be identically available.

On the other hand, in case that a CIF is enabled, PDSCH transmission resource allocation information on the same DL cell and a different DL cell and PUSCH transmission resource allocation information on UL cell linked with the corresponding DL cell may be provide via PDCCH on a prescribed DL cell. In this case, CIF may be used to indicate a scheduling information on a prescribed DL/UL cell. In dong so, it may be able to use DCI format of a type extended to have CIF included in DCI format defined by the legacy 3GPP LTE release-8 system. The CIF may be set as a fixed 3-bit field and a position of the CIF may be fixed irrespective of a DCI format size. Moreover, PDCCH structure defined by the legacy 3GPP LTE release-8 system may be reusable.

In case that CIF is present, it may be preferable that a base station allocates a DL cell set to monitor PDCCH in order to reduce the load of blind decoding performed by a user equipment side. In this case, the blind decoding may mean the following scheme. First of all, a base station does not provide a user equipment with information indicating where the corresponding PDCCH exists in a control region allocated in a subframe. Secondly, the user equipment monitors a set of PDCCH candidates in the subframe and then performs demasking on CRC of each PDCCH using its C-RNTI. Finally, if error is not detected, the user equipment detects that the corresponding PDCCH is provided for the corresponding user equipment. Hence, when the number of DL cells to perform the blind decoding thereon is excessive, since the load of PDCCH monitoring operation performed by the user equipment increases, it may be able to configure a DL cell set on which the user equipment will perform the PDCCH monitoring. This DL cell set may be set to a portion of all the aggregated DL cells. And, the user equipment may be able to perform the detection/decoding of PDCCH on the configured DL cell set only. So to speak, in order to schedule PDSCH/PUSCH transmission for a prescribed user equipment, a base station may be able to transmit PDCCH(s) via the PDCCH monitoring DL cell set only. In particular, the PDCCH monitoring DL cell set may be set UE-specific, UE-group-specific or cell-specific.

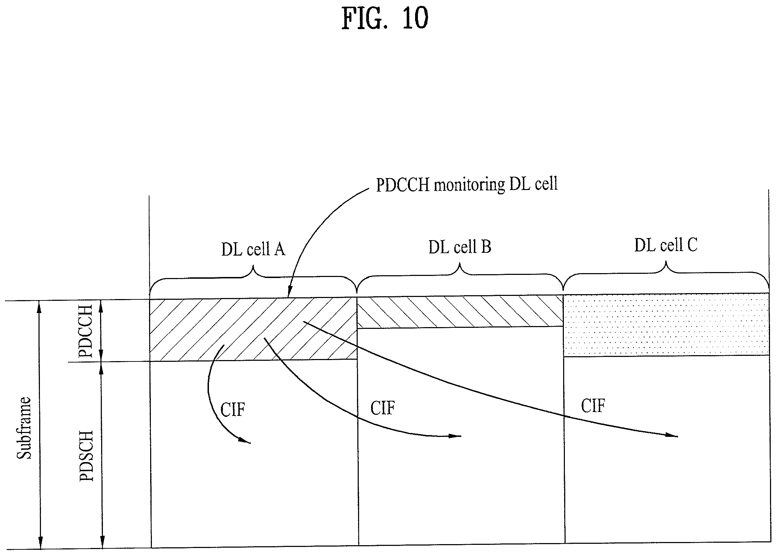

FIG. 10 is a diagram for one example of a DL subframe having 3 DL cells aggregated therein for a user equipment operable in a multi-carrier system. FIG. 10 shows that DL cell A is set as PDCCH monitoring DL cell. In case that CIF is disabled, PDSCH scheduling control information on each DL cell may be transmittable via PDCCH of the corresponding DL cell only. This PDCCH transmission may follow the PDCCH structure and DCI format defined by 3GPP LTE Release-8. On the other hand, in case that CIF is enabled by a UE-specific upper layer signaling, the PDSCH scheduling control information an be transmitted via PDCCH on the DL cell A configured as the PDCCH monitoring DL cell set only. In dong so, the PDSCH scheduling control information transmitted via the PDCCH on the DL cell A may contain the scheduling control information on the PDSCH transmission on other DL cells (e.g., DL cell B and DL cell C) as well as PDSCH transmission on the DL cell A. In particular, PDCCH is not transmitted on the DL cells B and C that are not configured as the PDCCH monitoring DL cell set.

In the following description, configuration and activation/deactivation of DL/UL cell are explained.

First of all, as mentioned in the foregoing description, a plurality of DL/UL cells may be set to be used by a single user equipment in a multi-carrier system. In particular, a plurality of the DL/UL cells may be notified to a user equipment by an RRC configuration signal. The user equipment may receive DL data of a plurality of the DL/UL cells or may transmit UL data via several UL cells. Yet, when data traffic property of the user equipment is not stable but is concentrated on a specific time, if the data traffic property is bursty, it may be unable to efficiently use the DL/UL cell configured by an upper layer signaling (i.e., RRC configuration). Hence, in order to use the DL/UL cell efficiently and to prevent unnecessary power consumption due to buffering, it may be able to consider activating/deactivating the dynamic DL/UL cell(s). The dynamic activation/deactivation of the DL/UL cell may mean a scheme of updating the configuration of DL/UL cell, which will be used by a user equipment, more frequently (or more quickly) than the RRC configuration signaling.

For instance, in case of DL cell, as a dynamic activation/deactivation scheme, a scheme of activating/deactivating each DL cell individually, a scheme of activating/deactivating all the rest of DL cells simultaneously except specific main DL cell(s) (e.g., DL P-cell) or the like may be applicable.

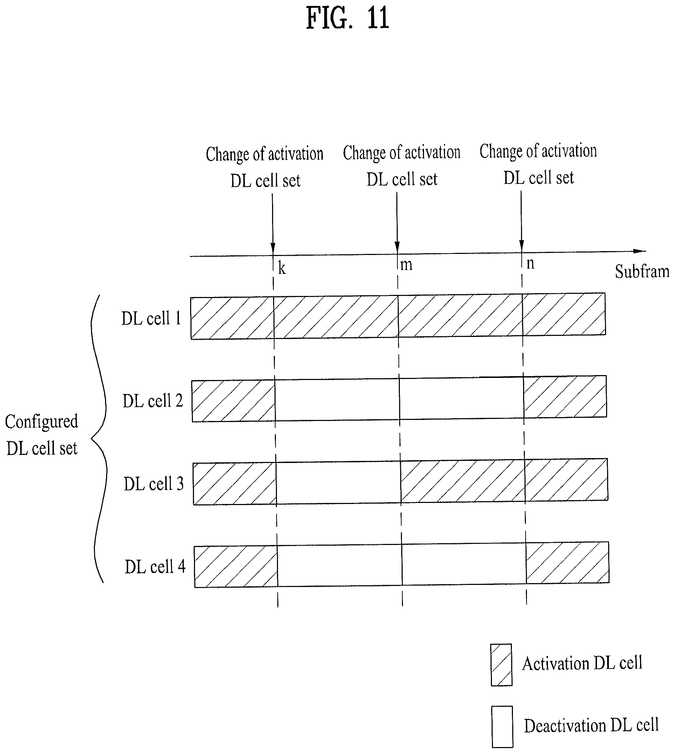

FIG. 11 is a diagram to describe dynamic activation/deactivation of DL cell. For instance, total 4 DL cells are configured for a prescribed user equipment, as shown in FIG. 11, and the number of DL cell(s) at a specific timing point can be limited or extended using a dynamic activation/deactivation signal. In the example shown in FIG. 11, after DL cells 1 to 4 have been configured active before subframe k, if a signal for instructing to change an active DL cell set is received in the subframe k, the DL cell 1 can become the active DL cell only after the subframe k. Subsequently, if a signal for instructing to change the active DL cell set is received in subframe m, the DL cell 1 and the DL cell 3 can become the active DL cells after the subframe m. Subsequently, if a signal for instructing to change the active DL cell set is received in subframe n, the DL cells 1 to 4 can become the active DL cells after the subframe n.

Although DL cells are exemplarily described with reference to FIG. 11, a dynamic activation/deactivation operation for UL cells can be performed in the same manner. Moreover, as a dynamic activation/deactivation signal for the DL/UL cell, a physical control signal via PDCCH or a MAC layer signal via PDSCH may be usable for example.

Extended ACK/NACK Resource Allocation

In a multi-carrier supportive system (e.g., 3GPP LTE-A system), a user equipment receives DL data via a plurality of PDSCHs on a plurality of DL cells and may then transmit a plurality of ACK/NACK informations correspondingly. In doing so, a plurality of the ACK/NACK informations may be transmitted on at least one UL cell in one subframe. Alternatively, such control information as ACK/NACK information and the like may be set to be transmitted on a specific UL cell (e.g., UL P-cell, etc.) configured as a main UL cell only.

If a plurality of ACK/NACK informations are transmitted in one subframe using PUCCH format 1a/1b, it may require high transmission power and increase PAPR of a UL transmission signal, whereby a coverage of a user equipment from a base station may decrease due to an inefficient use of a transmission power amplifier. In this case, it may be able to consider applying an ACK/NACK bundling or an ACK/NACK multiplexing to perform PUCCH format 1a/1b transmission. Yet, if DL data are received via numerous DL cells, excessive ACK/NACK bits exist. Hence, it may be difficult to perform a single PUCCH format 1a/1b transmission by directly applying the ACK/NACK bundling or multiplexing scheme or a plurality of ACK/NACK informations may not be correctly transmitted.

Irrespective of the application of the multi-carrier technology, if DL data are transmitted in DL subframes more than UL subframes in TDD mode, it may be difficult to perform a single PUCCH format 1a/1b transmission by directly applying the ACK/NACK bundling or multiplexing scheme or a plurality of ACK/NACK informations may not be correctly transmitted.

In the following description, various embodiments of the present invention for transmitting a plurality of ACK/NACK informations accurately and correctly by extending ACK/NACK transmission resources are explained. First of all, a basic concept of a channel selection scheme applicable to an ACK/NACK information transmission shall be described as follows.

Channel Selection Scheme

When PUCCH format 1a or PUCCH format 1b is used for UL ACK/NACK transmission, it may be able to transmit 1- or 2-bit ACK/NACK information. Yet, for example, if a plurality of PDSCH transmissions are performed in one DL subframe and ACK/NACK information on each of a plurality of the PDSCH transmissions is supposed to be transmitted in a single UL subframe, as performed in a multi-carrier system, or if ACK/NACK information on each of a plurality of PDSCH transmissions in a plurality of DL subframes is supposed to be transmitted in a single UL subframe, a method of representing ACK/NACK information having a size greater than that of ACK/NACK information acceptable by the conventional PUCCH format 1a/1b may be demanded.

To this end, in order to represent ACK/NACK information of which size is greater than the conventional maximum 2 bits, it may be able to increase a bit size for all ACK/NACK transmissions in a manner of reserving different transmission resources for PUCCH format 1a/1b and then applying a corresponding channel selection. For instance, a 2-bit part is represented via the conventional PUCCH format 1b and a part exceeding 2 bits may be represented via the channel selection.

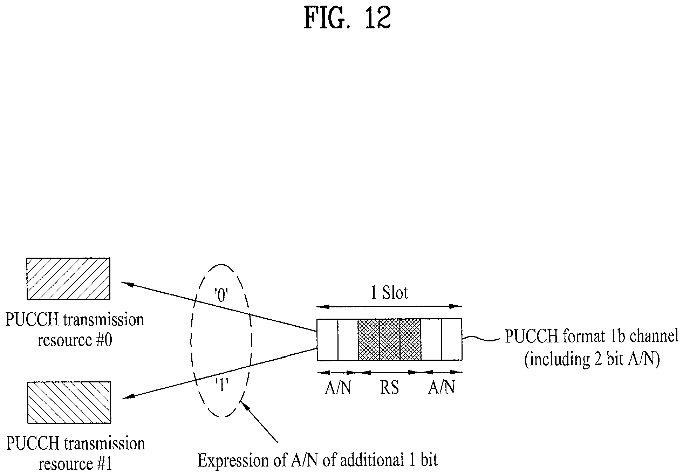

FIG. 12 is a diagram for one example of ACK/NACK channel selection. A method of representing 3-bit ACK/NACK information using a channel selection scheme is exemplarily described with reference to FIG. 12 as follows. To this end, after 2 different ACK/NACK PUCCH transmission resources have been configured and reserved, 1-bit information may be additionally represented based on a hypothesis for performing the transmission by selecting which one of the reserved two different ACK/NACK PUCCH transmission resources (i.e., channel selection). In particular, referring to FIG. 12, 2 PUCCH format 1 resources (i.e., PUCCH transmission resource #0 and PUCCH transmission resource #1) can be configured for 2-bit ACK/NACK PUCCH format 1b. In case that 3-bit ACK/NACK information is transmitted, 2 bits in the 3-bit ACK/NACK information may be represented via the PUCCH format 1b and the remaining 1 bit may be represented in a manner of selecting which one of the 2 PUCCH transmission resources. For instance, it may be able to build a following hypothesis. First of all, if the PUCCH transmission resource #0 is selected, it may mean '0'. Secondly, if the PUCCH transmission resource #1 is selected, it may mean '1'. Thus, if one of the 2 PUCCH transmission resources is selected, it may be able to represent 1 bit (i.e., 0 or 1). Therefore, additional 1-bit ACK/NACK information can be represented together with the 2-bit ACK/NACK information represented via the PUCCH format 1b.

Thus, if the channel selection is applied to the ACK/NACK information transmission, a user equipment may be able to ACK/NACK information having an increasing bit number using transmission energy for transmitting one PUCCH only. Meanwhile, in order to detect the ACK/NACK channel selection applied PUCCH, a base station may attempt to detect all the configured PUCCH transmission resources.

As mentioned in the above description with reference to FIG. 12, in order to apply the ACK/NACK channel selection scheme, it may be necessary to make a reservation of a plurality of ACK/NACK PUCCH transmission resources. In particular, in case that a plurality of ACK/NACK PUCCH transmission resources are configured, it may be able to represent ACK/NACK information in a larger size based on which PUCCH resource is used.

According to the present invention, a method of transmitting ACK/NACK information having an increasing size is proposed as follows. First of all, by extending this channel selection scheme, a plurality of PUCCH transmission resources are allocated to one user equipment. If the corresponding user equipment modulates a plurality of PUCCH resources in a single UL subframe and then transmits them simultaneously. Alternatively, the corresponding user equipment selects at least one of a plurality of the PUCCH resources, modulates the selected at least one PUCCH resource appropriately, and then transmits the modulated at least one PUCCH resource simultaneously. In particular, instead of applying the conventional channel selection scheme as it is, one user equipment may use all of a plurality of PUCCH resources or may select at least one PUCCH resource from a plurality of PUCCH resources [channel selection]. For instance, one user equipment may simultaneously transmit ACK/NACK information on a plurality of allocated PUCCH resources. For another instance, one user equipment selected some PUCCH resource(s) from a plurality of PUCCH resources and may then transmit ACK/NACK information on the selected PUCCH resource(s).

To this end, a detailed method of allocating a plurality of PUCCH resources to one user equipment is required. In the following description, various examples of configuring a plurality of PUCCH resources according to the present invention are explained.

For one example, a plurality of PUCCH resources may use a type of the PUCCH format 1a/1b defined in the legacy 3GPP LTE Release-8 as it is.

Alternatively, it may be able to consider a method of increasing multiplexing capacity by appropriately modifying a code resource (or a sequence resource) in PUCCH ACK/NACK transmission resources. For instance, in the ACK/NACK channel structure in case of the normal CP described with reference to FIG. 6, since it may be able to apply a cyclic shift (CS) value identified in a length-12 sequence in frequency domain, there exist maximum 12 identifiable frequency domain code resources. Moreover, in the ACK/NACK channel structure in case of the normal CP described with reference to FIG. 6, since a length-4 orthogonal spreading code (OC) is applied to 4 symbols for ACK/NACK information transmission in time domain, there exist maximum 4 identifiable time domain code resources. Moreover, in the ACK/NACK channel structure in case of the normal CP described with reference to FIG. 6, since a length-3 orthogonal spreading code (OC) is applied to 3 symbols for RS transmission in time domain, there exist maximum 3 identifiable time domain code resources. On the other hand, in case of an extended CP, there may exist 12 identifiable CS resources in frequency domain, 4 identifiable OC resources applied to ACK/NACK information transmission symbol in time domain, and 2 identifiable OC resources applied to RS transmission symbol in time domain. Yet, the above-described PUCCH ACK/NACK channel structure based on FIG. 6 is just exemplary, by which the present invention may be non-limited. In particular, according to the present invention, using the frequency-domain CS resource usable as PUCCH ACK/NACK transmission resource, the OC resource applied to the ACK/NACK information transmission symbol of the time domain and the OC resource applicable to the RS transmission symbol of the time domain corresponds to the principle of the present invention only, which may be non-limited by detailed numerical values. Hence, according to various embodiments of the present invention, a plurality of PUCCH ACK/NACK transmission resources (hereinafter named extended PUCCH ACK/NACK resources) may be configured using L cyclic shifts (CSs) as code resources applied to a sequence in frequency domain, M identifiable orthogonal spreading codes (OCs) applied to ACK/NACK information transmission symbol in time domain and N orthogonal spreading codes (OCs) applied to RS transmission symbol in time domain.

In the following description, for clarity of the description of the present invention, OC resource applied to SC-FDMA symbol for ACK/NACK information transmission in time domain shall be named 'data OC resource' and OC resource applied to SC-FDMA symbol for RS transmission in time domain shall be named 'RS OC resource'. Moreover, CS resource applied to a sequence in frequency domain in a data part shall be named 'data CS resource' and CS resource applied to a sequence in frequency domain in RS part shall be named 'RS CS resource'.

In the following description, PUCCH resources specified by a plurality of RS resources and a plurality of OC resources are explained. The following description relates to the number of PUCCH resources that can be configured within a single resource block (RB). In this case, it may be able to configure total $L \times M$ different combinations by L data CS resources and M data OC resources in a data part. And, each of the combinations shall be named 'data resource'. Similarly, it may be able to configure total $L \times N$ different combinations by L RS CS resources and N RS OC resources in an RS part. And, each of the combinations shall be named 'RS resource'. A single PUCCH resource may be specified by a combination of a single data resource and a single RS resource.

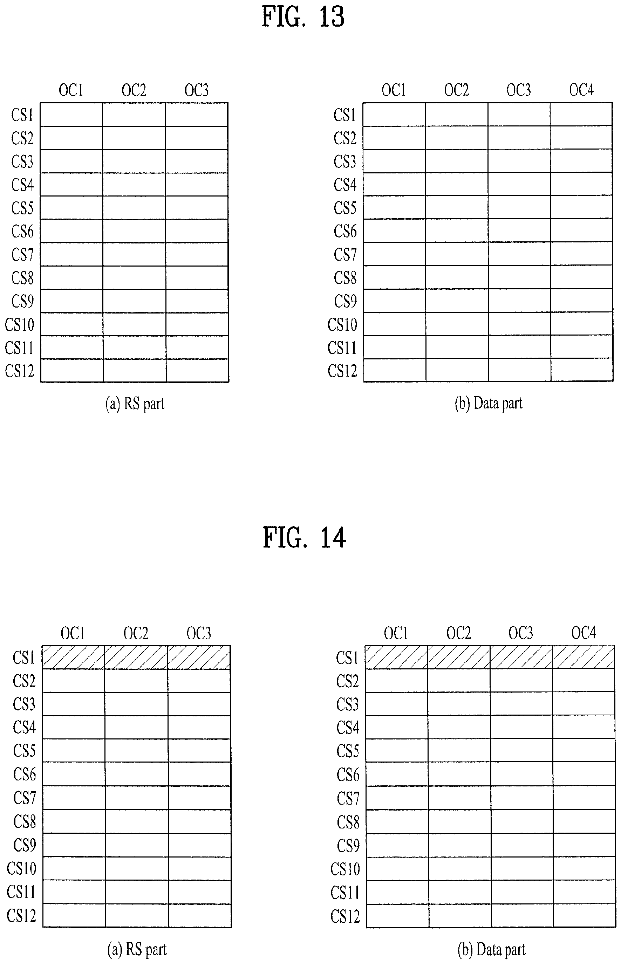

For instance, referring to FIG. 13, when L = 12, M = 4, and N = 3, the total number of identifiable PUCCH resources allocable to a single user equipment in a single RB of a single subframe is described for example as follows. First of all, using 12 CS resources and 3 OC resources in an RS part, it may be able to configure total 36 kinds of different combinations. And, using 12 CS resources and 4 OC resources in a data part, it may be able to configure total 48 kinds of different combinations. Moreover, a single PUCCH resource may be specified by one of the 36 kinds of the combinations of the RS part and one of the 48 kinds of the combinations of the data part. Hence, theoretically, when L = 12, M = 4, and N = 3, the total number of the identifiable PUCCH resources allocable in a single RB of a single subframe may amount to 1,728 (= $12 \times 3 \times 12 \times 4$). If the data part and the RS part are restricted to allocate the same CS resources only, it may be able to configure 144 (= $12 \times 3 \times 4$) identifiable PUCCH resources for example.

Different PUCCH resources may be identified from each other by different RBs, respectively. In particular, as mentioned in the foregoing description, the different PUCCH resources may be identified from each other using a plurality of different CS resources and a plurality of different OC resources within a single RB. Yet, a different PUCCH resource may be configured if RB is different despite using the same CS resource and the same OC resource. Of course, a different PUCCH resource may be specified by a different RB, a different CS resource and a different OC resource as well. For example, in case of 3 PUCCH resources (i.e., a 1st PUCCH resource, a 2nd PUCCH resource and a 3rd PUCCH resource) different from each other, the 1st PUCCH resource may be specified by data CS1, data OC1, RS CS1 and RS OC1 within RB1, the 2nd PUCCH resource may be specified by data CS2, data OC2, RS CS2 and RS OS2 within RB1, and the 3rd PUCCH resource may be specified by data CS1, data OC1, RS CS1 and RS OC1 within RB 2. In particular, in case that at least one of data CS resource, data OC resource, RS CS resource, and RS OC resource is different, a different PUCCH resource may be specified.

According to the present invention, if N < M (i.e., since a length of OC applied to an RS transmission symbol is smaller than that of OC applied to an ACK/NACK information transmission symbol, if the number of available RS OC resources is smaller than that of data OC resources), a useful PUCCH resource allocating method is proposed. In the following description of various embodiments of the present invention, assume that a plurality of extended ACK/NACK

**EP 2 566 087 B1**

transmission resources allocated to a single user equipment entirely belong to the same RB. This assumption is made for clarity of the following description. Alternatively, within the scope of the present invention, a plurality of PUCCH resources may be allocated to a single user equipment on at least one RB.

### 1st Embodiment

The present embodiment relates to a method of allocating RS resources, of which number is smaller than that of data resources within a single RB, in allocating a plurality of PUCCH resources to a single user equipment. In this case, as mentioned in the foregoing description, 'data resource' is the resource specified by L CS resources and M data OC resources in a data part and 'RS resource' is the resource specified by L CS resources and N RS OC resources in an RS part. The following description of the present embodiment is to describe different PUCCH resources configurable within a single RB among a plurality of PUCCH resources allocable to a user equipment. In particular, a plurality of different PUCCH resources may be allocated on at least one RB to a single user equipment as well.

For instance, when a plurality of PUCCH resources are allocated to a single user equipment, if K data resources (where, $K \leq M$) are allocated, one RS resource or P RS resources (where, $P < K$) may be allocated.

If a single RS resource is allocated to a single user equipment, since there exists a single RS resource available for the corresponding user equipment, it means that the corresponding user equipment may not need to consider using a different RS resource. Hence, since a base station having received an ACK/NACK signal from a user equipment knows what kind of RS resource is used for the ACK/NACK signal transmission performed by the corresponding user equipment, a channel may be estimated using RS carried on the corresponding RS resource and an extended ACK/NACK information may be obtained via a plurality of data resources.

When at least 2 RS resources are allocated to a single user equipment, it may be able to transmit extended ACK/NACK informations more than those of the case of allocating a single RS OC resource using a plurality of RS resources.

Thus, if data resources more than RS resources are allocated in allocating a plurality of PUCCH resources to a single user equipment, it may be specifically useful for a case that the total number of resources allocable as RS resources within a single RB is smaller than the total number of resources allocable to data resources. Hence, if RS resources, of which number is smaller than the number of data resources, are allocated to each user equipment or some user equipments within a prescribed RB, it may be able to allocate all data resources within the corresponding RB for the extended ACK/NACK information transmission without wasting the data resources.

In the legacy 3GPP LTE Release-8, as mentioned in the foregoing description, despite that the number of OC resources applicable for ACK/NACK data part is 4, the number of OC resources applicable to the ACK/NACK data part is limited to 3 due to the number (e.g., 3 in case of a normal CP) of OC resources applied to RS. Yet, according to the present invention, even if total 3 OC resources (e.g., in case of a normal CP) are available in an RS part, all the 4 OC resources (in case of the normal CP) may be utilized without being limited by the number of OC resources in the RS part.

One example of allocating a plurality of PUCCH resources to a single user equipment is described with reference to FIG. 14. FIG. 4 exemplary shows a case that the number L of CS resources is 12 [i.e., L = 12 (CS1, CS2, ..., CS12)], that the number M of data OC resources is 4 [i.e., M = 4 (OC1, OC2, OC3, OC4)], and that the number N of RS OC resources is 3 [i.e., N = 3 (OC1, OC2, OC3)]. In particular, FIG. 14 (a) shows a case that 3 RS resources (i.e., CS1 & OC1, CS1 & OC2, and CS1 & OC3) among total 36 RS resources specified by combinations of CS resources and RS OC resources applied to an RS part are allocated to a single user equipment. And, FIG. 14 (b) shows a case that 4 data resources (i.e., CS1 & OC1, CS1 & OC2, CS1 & OC3, CS1 & OC4) among total 48 data resources specified by combinations of CS resources and data OC resources applied to an RS part are allocated to a single user equipment. N this case, since the allocated PUCCH resources are specified by the combinations of the 3 RS resources and the 4 data resources, the single user equipment may be represented as receiving allocation of 12 PUCCH resources.

In the legacy 3GPP LTE Release-8 system, a single RS OC resource and a single data OC resource in a single subframe are allocated to a single user equipment. On the other hand, according to the present invention, referring to FIG. 14, a singe user equipment may receive allocation of 1 CS resource and 4 OC resources in a data part and allocation of 1 CS resource and 3 OC resources in an RS part. Alternatively, a single user equipment may receive allocation of 1 CS resource and at least one of 4 data OC resources in a data part. Alternatively, a single user equipment may receive allocation of 1 CS resource and at least one of 3 RS OC resources in an RS part.

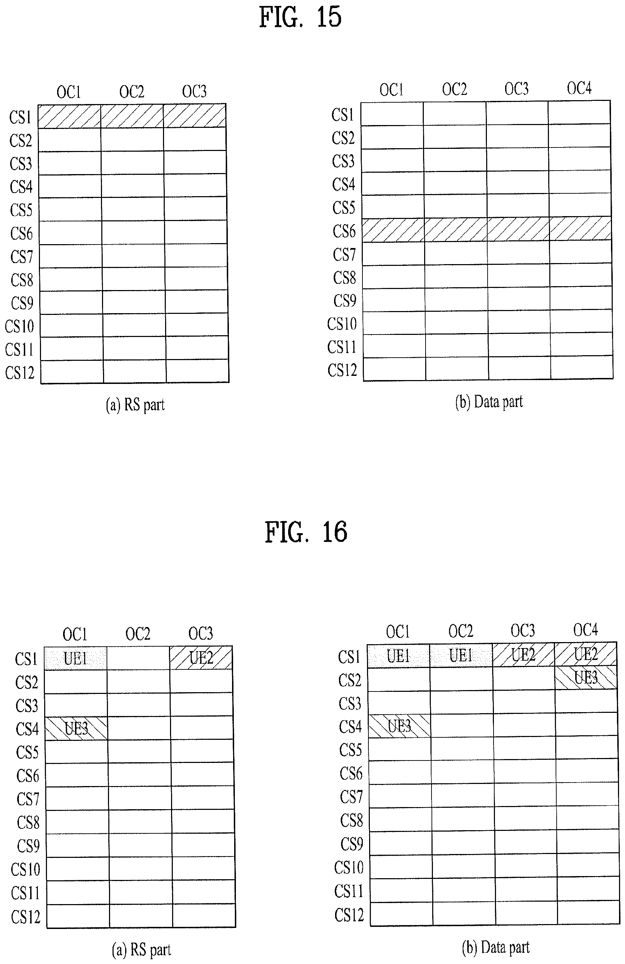

In the example shown in FIG. 14, the CS resource allocated for the data part to the single user equipment is equal to the CS resource allocated for the RS part, by which the present invention may be non-limited. For example, referring to FIG. 15, a CS resource CS6 allocated fir a data part to a single user equipment may be different from a CS resource CS1 allocated for an RS part.

Meanwhile, referring to FIG. 16, 1 RS resource and 2 data resources may be allocated to a single user equipment. In this case, since PUCCH resources are specified by combinations of the 1 RS resource and the 2 data resources, the single user equipment may be represented as receiving allocation of total 2 PUCCH resources. In the example shown

14

in FIG. 16, a 1st user equipment UE1 and a 2nd user equipment UE2 receive allocation of the same CS resource CS1 and each of the 1st user equipment UE1 and the 2nd user equipment UE2 receives allocation of 2 different data OC resources (i.e., OC1 and OC2 are allocated to the UE1 and OC3 and OC4 are allocated to the UE2). Moreover, the 1st user equipment UE1 and the 2nd user equipment UE2 receive allocation of the same CS resource CS1 and each of the 1st user equipment UE1 and the 2nd user equipment UE2 receives allocation of 1 different data OC resource (i.e., OC1 is allocated to the UE1 and OC3 is allocated to the UE2). Hence, even if the total number of OC resources available for the RS part is smaller than the total number of OC resources available for the data part, it may be able to utilize all the OC resources of the data part.

According to one example of the present invention, different CS resources may be allocated to a single user equipment. For instance, referring to the example of the PUCCH resource allocation to a 3rd user equipment UE3 in FIG. 16, in a manner that a plurality of different CS resources CS3 and CS4 and a plurality of different OC resources (OC1 and OC4) in the data part are allocated to a single user equipment, it may be able to allocate 2 data resources to the single user equipment.

In this case, when a plurality of PUCCH resources are allocated to a plurality of user equipments in a single subframe, neither RS resource nor data resource in a single RB allocated to a prescribed single user equipment may be configured not to be allocated to a different user equipment. For instance, when CS1 & OC1 (RS resource 1) in an RS part of RB1 are allocated to UE1 and CS1 & OC1 (data resource 1) and CSI & OC2 (data resource 2) in a data part of the RB1 are allocated to the UE1, assume a case that CS1 & OC3 (data resource 3) and CS1 & OC4 (data resource 4) in a data part are allocated to UE2 by allocating RS resource 1 (i.e., the RS resource allocated to the UE1) to the UE2 as RS resource in the same RB1. In this case, different PUCCH resources may be regarded as allocated to the UE1 and the UE2, respectively. Yet, in aspect of a base station that receives ACK/NACK signals from several user equipments, it may cause a problem that the base station may be unable to identify that the RS transmitted on the RS resource 1 of the RB 1 belongs to which user equipment.

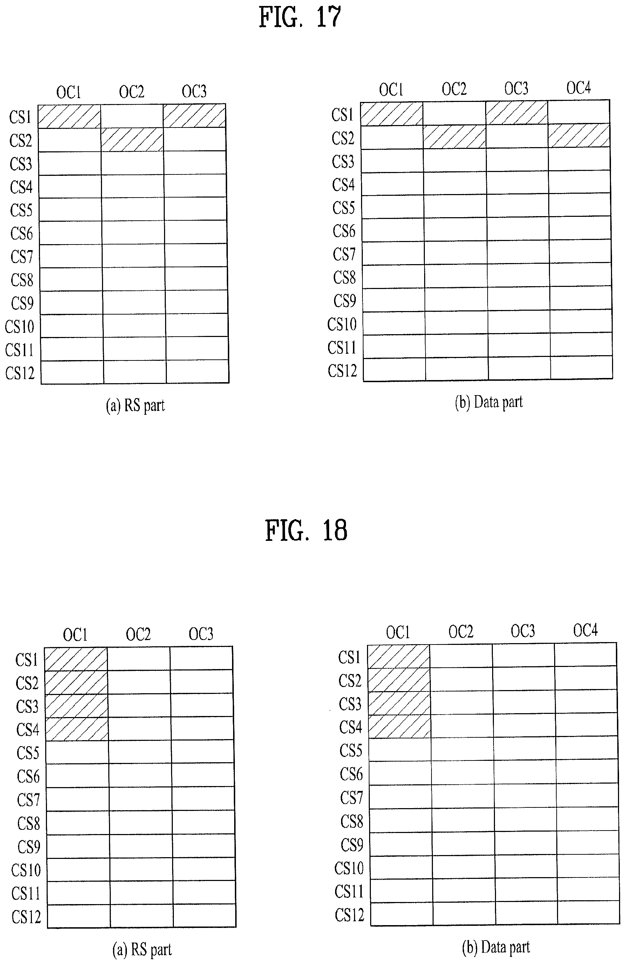

Another example of the present invention for allocating 4 data resources and 3 RS resources (e.g., one of 3 RS resources, a portion of a plurality of RS resources) to a single user equipment is described with reference to FIG. 17 as follows. FIG. 17 shows one example of allocating a different CS resource for a different OC resource to a single user equipment. Referring to FIG. 17, 3 RS resources (i.e., CS1 & OC1, CS2 & OC2, and CS1 & OC3) in an RS part and 4 data resources (i.e., CS1 & OC1, CS2 & OC2, CS1 & OC3, and CS2 & OC4) in a data part may be allocated to a single user equipment. In particular, according to the present invention, it may be able to avoid interference between resources in a manner of allocating a different CS resource for an adjacent OC resource. Yet, the present invention may not exclude a case of allocating a different CS resource for a different OC resource irrespective of whether OC resource is adjacent.

According to one of various examples of the present invention mentioned in the foregoing description, a single user equipment may be able to transmit ACK/NACK information in an increased size in a manner of appropriately modulating a plurality of PUCCH resources allocated in a single RB and then transmitting the modulated PUCCH resources simultaneously in a single UL subframe or in a manner of selecting at least one of a plurality of PUCCH resources, modulating the selected at least one or more PUCCH resources appropriately, and then transmitting the modulated PUCCH resources simultaneously in a single UL subframe.

2nd Embodiment

When a plurality of PUCCH resources are allocated to a single user equipment, the present embodiment relates to a method of allocating the same OC resource and different CS resources of at least one of a data resource and an RS resource within a single RB. In this case, the 'data resource' is the resource specified by L CS resources and M data OC resources in the data part mentioned in the foregoing description and the 'RS resource' is the resource specified by L CS resources and N RS OC resources in the RS part mentioned in the foregoing description. The following description of the present embodiment is provided to explain different PUCCH resources configurable within a single RB among a plurality of PUCCH resources allocable to a user equipment. In particular, a plurality of different PUCCH resources in at least one RB may be allocated to a single user equipment.

After a plurality of PUCCH resources have been allocated to a plurality of user equipments in a single subframe, respectively, when each of the user equipments transmits ACK/NACK information, in aspect of a base station that receives the transmitted ACK/NACK information, it may be highly probable that time/frequency synchronization of a plurality of the PUCCH resources from different user equipments has relatively low accuracy, whereas time/frequency synchronization of a plurality of PUCCH resources allocated to a single user equipment is relatively accurate. Hence, when a plurality of the PUCCH resources allocated to the single user equipment are identified, even if OC resource applied in time domain is identically allocated, it may be enough to identify a plurality of the PUCCH resources from each other by allocating different CS resources in frequency domain. On the other hand, since it is highly probable that UL timings of different user equipments do not match despite considering applying UL timing alignment, it may not be enough to identify a plurality of the PUCCH resources allocated to the different user equipments from each other by allocating different resources in frequency domain without discrimination in time domain. Therefore, in order to identify a plurality of the PUCCH resources allocated to the different user equipments, it may be preferable that different OC resources in time domain are allocated to the different user equipments, respectively.

FIG. 18 shows one example of allocating a same OC resource and different CS resources to a single user equipment. Referring to FIG. 18, a plurality of RS resources may be allocated to a single user equipment in a manner that one OC resource OC1 and a plurality of CS resources CS1, CS2, CS3 and CS4 in an RS part are allocated to the single user equipment. Moreover, a plurality of RS resources may be allocated to a single user equipment in a manner that one OC resource OC1 and a plurality of CS resources CS1, CS2, CS3 and CS4 in a data part are allocated to the single user equipment.

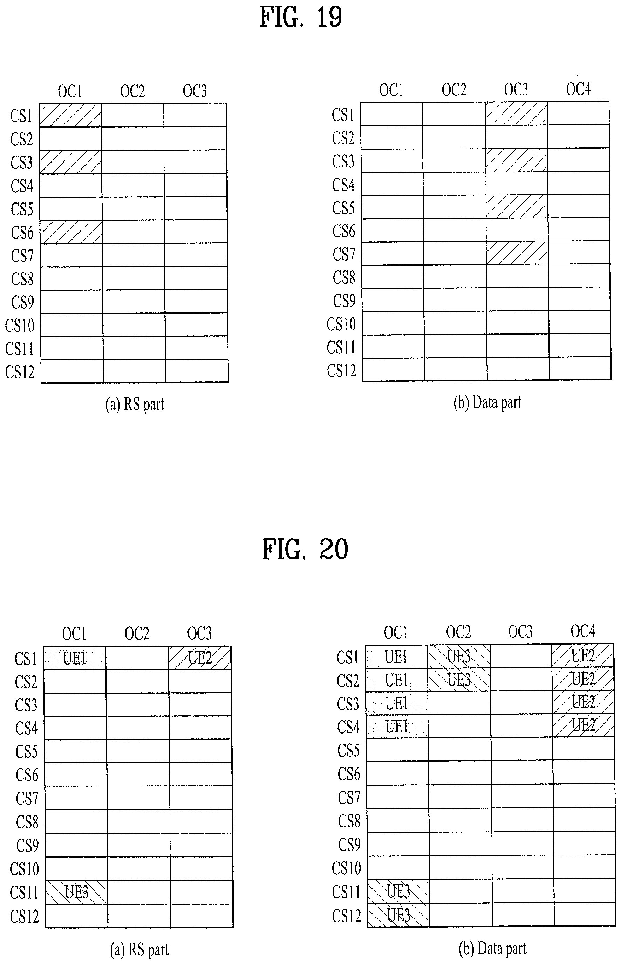

Although FIG. 18 shows the example that contiguous CS resources are allocated to a single user equipment, CS resources allocated to the single user equipment may not be contiguous with each other. For instance, referring to FIG. 19, 1 OC resource, CS1, CS3 and CS6 in an RS part and 1 OC resource, CS1, CS3, CS5 and CS7 in a data part may be allocated.

Meanwhile, the same OC resource OC1 in each of the RS part and the data part may be allocated to the single user equipment, as shown in FIG. 18. Yet, referring to FIG. 19, OC resource OC1 of an RS part allocated to a single user equipment may differ from OC resource OC3 of a data part allocated to the single user equipment.

According to the 2nd embodiment of the present invention, as mentioned in the foregoing description of the 1st embodiment of the present invention, the number of RS resources to be allocated may be smaller than that of data resources. For instance, 1 OC resource OC3 and 4 CS resources CS1, CS3, CS5 and CS7 in a data part may be allocated and 1 OC resource OC1 and 3 CS resources CS1, CS3 and CS6 in an RS part may be allocated. Moreover, 1 RS resource (e.g., OC1 & CS1, etc.) in the RS part may be allocated only.

One example of allocating a plurality of different PUCCH resources to a plurality of user equipments is described with reference to FIG. 20 as follows. First of all, Fig. 20 shows one example of allocating 1 RS resource and 4 data resources to a single user equipment. Although the example shown in FIG. 20 shows that different CS resources are preferentially allocated to each user equipment based on the same OC resource in a data part in case of a 1st user equipment UE1 and a 2nd user equipment UE2, a different CS resource in a different OC resource may be allocated to a single user equipment like the case of a 3rd user equipment UE3.

For instance, it may be able to assume a rule of allocating a plurality of data resources. First of all, when data resource is allocated to each user equipment, CS resource is preferentially filled up on one OC resource. If the CS resource is filled up, a next OC resource is filed up. In this manner, a plurality of the data resources may be allocated. According to this allocation rule, after CS1 to CS10 of OC1 have been allocated to other terminals like the case of the UE3 shown in FIG. 20, when 4 data resources are allocated to the UE3, since CS resource to be allocated does not exist in the OC1 after allocation of 2 data resources (OC1 & CS11, OC1 & CS12), it may be able to allocate OC2 & CS1 and OC2 & CS2.

According to one of various examples of the present invention mentioned in the foregoing description, a single user equipment may be able to transmit ACK/NACK information in an increased size in a manner of appropriately modulating a plurality of PUCCH resources allocated in a single RB and then transmitting the modulated PUCCH resources simultaneously in a single UL subframe or in a manner of selecting at least one of a plurality of PUCCH resources, modulating the selected at least one or more PUCCH resources appropriately, and then transmitting the modulated PUCCH resources simultaneously in a single UL subframe.

According to the various examples of the 1st and 2nd embodiments of the present invention mentioned in the foregoing description, the case that the number L of CS resources is 12 [i.e., L = 12], that the number M of data OC resources is 4 [i.e., M = 4], and that the number N of RS OC resources is 3 [i.e., N = 3] is exemplarily explained based on a subframe structure of a normal CP for clarity, by which the scope of the present invention may be non-limited. In particular, based on a subframe structure of an extended CP, the principle of the present invention may be identically applicable to a case that the number L of CS resources is 12 [i.e., L = 12], that the number M of data OC resources is 4 [i.e., M = 4], and that the number N of RS OC resources is 2 [i.e., N = 2]. So to speak, according to various embodiments of the present invention, using L CS resources, M data OC resources and N RS OC resources, a plurality of PUCCH ACK/NACK transmission resources are allocated to a plurality of user equipments, respectively. And, each of the user equipments is enabled to transmit extended ACK/NACK information via a plurality of the allocated PUCCH resources. And, the scope of the present invention may be non-limited by the detailed numerical values of L, M and N.

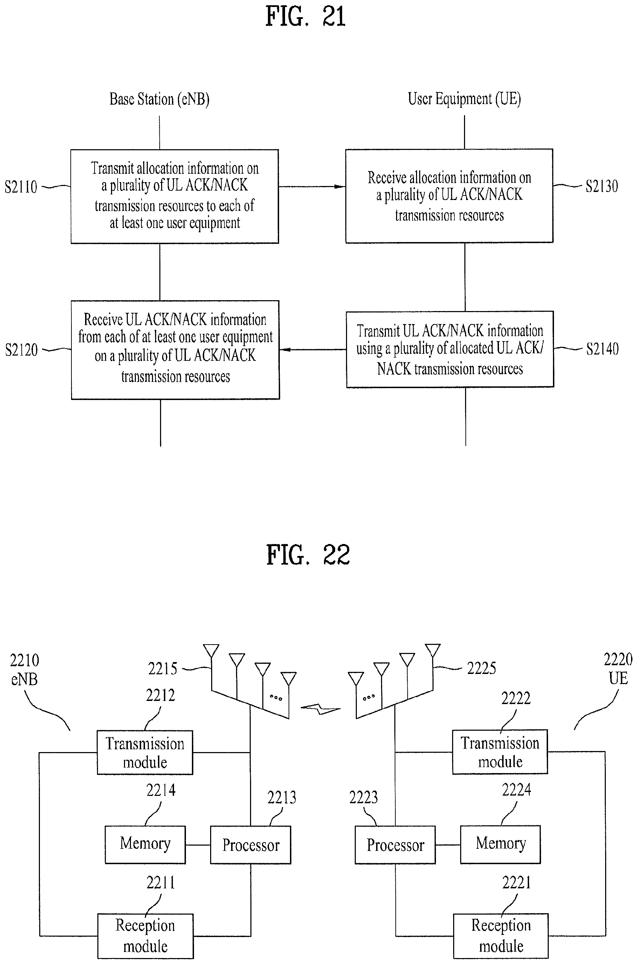

FIG. 21 is a flowchart to describe an extended ACK/NACK information transmitting method according to one embodiment of the present invention.

The step S2110 and the step S2120 indicate an operation in a base station side, while the step S2130 and the step S2140 indicate an operation in a user equipment side.

In the step S2110, a base station allocates a plurality of UL ACK/NACK transmission resources (i.e., a plurality of ACK/NACK transmission resources) to a single user equipment and may be then able to deliver the corresponding allocation information to the user equipment.

Each of a plurality of the UL ACK/NACK transmission resources may be specified by a 1st cyclic shift (CS) applied to a sequence in frequency domain for UL ACK/NACK information of a UL ACK/NACK transmission, a 2nd cyclic shift (CS) applied to a sequence in frequency domain for a reference signal (RS), a 1st orthogonal spreading code (OC) applied to ACK/NACK information transmission symbol in time domain of the UL ACK/NACK transmission, and a 2nd orthogonal spreading code (OC) applied to a reference signal (RS) transmission symbol in time domain of the UL ACK/NACK transmission. In particular, each of a plurality of the UL ACK/NACK transmission resources may be identified by at least one of a different RB, a different 1st CS, a different 2nd CS, a different 1st OC and a different 2nd OC. So to speak, for each of a plurality of the UL ACK/NACK transmission resources allocated to a single user equipment, at least one of an RB, a 1st CS, a 2nd CS, a 1st OC and a 2nd OC may be differently allocated. Moreover, when a plurality of UL ACK/NACK transmission resources are allocated to a single user equipment, at least one RB, at least one 1st CS, at least one 2nd CS, at least one 1st OC and at least one 2nd OC may be allocated to the corresponding user equipment. In this case, the 1st CS corresponds to the data CS resource in the aforementioned embodiments, the 2nd CS corresponds to an RS CS resource, the 1st OC corresponds to a data OC resource, and the 2nd OC corresponds to an RS OC resource.

Meanwhile, when a plurality of UL ACK/NACK transmission resources are allocated to a single user equipment, the number of resources (i.e., data resources in the examples mentioned in the foregoing description) specified by a 1st CS and a 1st OC may be greater than that of resources (i.e., RS resources in the examples mentioned in the foregoing description) specified by a 2nd CS and a 2nd OC. Hence, it may be able to utilize all the resources of the data part without restriction put on the number of available resources in the RS part of the UL ACK/NACK transmission resource.

The number of resource(s) (i.e., RS resource(s)) specified by a 2nd CS and 2nd OC allocated to a single user equipment may be one.

One 1st OC and a plurality of 1st CS resources is allocated to a single user equipment. In particular, one OC in a data resource is allocated to a single user equipment and each data resource may be identifiable by a CS.

A base station may be able to allocate a plurality of UL ACK/NACK transmission resources to each of at least one or more user equipments in the above-mentioned manner. In dong so, a plurality of the UL ACK/NACK transmission resources allocated to each of the at least one or more user equipments may include a plurality of UL ACK/NACK transmission resources on a single resource block in a single UL subframe.

In the step S2110, the base station may be able to transmit UL ACK/NACK transmission resource allocation information to each of the at least one or more user equipments. In the step S2130, the user equipment may be able to receive information indicating what are a plurality of the UL ACK/NACK transmission resources allocated to the corresponding user equipment from the base station.

In the step S2140, the user equipment may be able to transmit the UL ACK/NACK information in a single UL subframe using a plurality of the UL ACK/NACK transmission resources allocated to the corresponding user equipment. Hence, in the step S2120, the base station may be able to receive the UL ACK/NACK information from each of the at least one or more user equipments via a plurality of the UL ACK/NACK transmission resources in the single UL subframe.

In the legacy 3GPP LTE Release-8 system, it is enough for a user equipment to transmit maximum 2-bit UL ACK/NACK information in a single UL subframe. Yet, when a user equipment receives a plurality of DL data packets via a plurality of DL carriers (DL cells) from a base station and then transmits UL ACK/NACK information in response to the received DL data packets or when a user equipment receives a plurality of DL data packets via a plurality of DL subframes from a base station and then transmits UL ACK/NACK information in response to the received DL data packets, the conventional UL ACK/NACK transmission resources are not sufficient. Therefore, a single user equipment receives allocation of a plurality of UL ACK/NACK transmission resources and then transmits UL ACK/NACK information using the allocated UL ACK/NACK transmission resources, thereby transmitting extended UL ACK/NACK information.

Moreover, UL ACK/NACK information of a single user equipment is transmitted using all of a plurality of UL ACK/NACK transmission resources allocated to the single user equipment simultaneously or may be selected in a manner of selecting at least one of a plurality of the UL ACK/NACK transmission resources allocated to the single user equipment.

In the extended UL ACK/NACK information transmitting method according to the present invention described with reference o FIG. 21, the matters of the various embodiments of the present invention mentioned in the foregoing description are independently applicable or at least two of the various embodiments of the present invention may be simultaneously applicable. And, duplicate contents may be omitted for clarity.

In the description of various embodiments of the present invention, a base station is mainly taken as an example of a DL transmission entity and a user equipment is mainly taken as an example of a UL transmission entity, by which the scope of the present invention may be non-limited. In case that a relay node becomes a transmission entity in downlink to a user equipment or a reception entity in uplink from a user equipment or that a relay node becomes a transmission entity in uplink to a base station or a reception entity in downlink from a base station, the principle of the present invention described through various embodiments of the present invention may be identically applicable.

FIG. 22 is a diagram for configurations of a base station device and a user equipment device according to the present invention.

Referring to FIG. 22, a base station device (eNB) 2210 according to the present invention may include a receiving module 2211, a transmitting module 2212, a processor 2213, a memory 2214 and a plurality of antennas 2215. In this case, a plurality of the antennas 2215 may mean a base station device that supports MIMO transmission and reception. The receiving module 2211 may be able to receive various signals, data, information and the like in uplink from a user equipment. The transmitting module 2212 may be able to transmit various signals, data, information and the like in DL to the user equipment. Moreover, the processor 2213 may be configured to control overall operations of the base station device 2210.

The base station device 2210 according to one embodiment of the present invention may be configured to receive UL ACK/NACK information. The processor 2213 of the base station device 2210 may be configured to allocate a plurality of UL ACK/NACK transmission resources to at least one or more user equipments, respectively. And, the processor 2213 may be configured to receive UL ACK/NACK information carried on at least one of a plurality of UL ACK/NACK transmission resources in one UL subframe from at least one user equipment via the receiving module 2211. In this case, at least one of an RB, a 1st CS, a 2nd CS, a 1st OC and a 2nd OC may be differently allocated to each of a plurality of the UL ACK/NACK transmission resources.

The processor 2213 of the base station device 2210 performs a function of operating information received by the user equipment device, information to be externally transmitted and the like. The memory 2214 may be able to store the operated information and the like for prescribed duration and may be substituted with such a component as a buffer (not shown in the drawing) and the like.

Referring to FIG. 22, a user equipment device (UE) 2220 according to the present invention may include a receiving module 2221, a transmitting module 2222, a processor 2223, a memory 2224 and a plurality of antennas 2225. In this case, a plurality of the antennas 2225 may mean a user equipment device that supports MIMO transmission and reception. The receiving module 2221 may be able to receive various signals, data, information and the like in downlink from the base station. The transmitting module 2222 may be able to transmit various signals, data, information and the like in UL to the base station. Moreover, the processor 2223 may be configured to control overall operations of the user equipment device 2220.

The user equipment device 2220 according to one embodiment of the present invention may be configured to transmit UL ACK/NACK information. The processor 2223 of the user equipment device 2220 may be configured to receive allocation of a plurality of UL ACK/NACK transmission resources from the base station. And, the processor 2223 may be configured to transmit UL ACK/NACK information carried on at least one of a plurality of UL ACK/NACK transmission resources in one UL subframe to the base station via the transmitting module 2222. In this case, at least one of an RB, a 1st CS, a 2nd CS, a 1st OC and a 2nd OC may be differently allocated to each of a plurality of the UL ACK/NACK transmission resources.

The processor 2223 of the user equipment device 2220 performs a function of operating information received by the user equipment device, information to be externally transmitted and the like. The memory 2224 may be able to store the operated information and the like for prescribed duration and may be substituted with such a component as a buffer (not shown in the drawing) and the like.

The detailed configurations of the base station device and the user equipment device mentioned in the above description may be implemented in a manner that the matters of the various embodiments of the present invention mentioned in the foregoing description are independently applicable or that at least two of the various embodiments of the present invention are simultaneously applicable. And, duplicate contents may be omitted for clarity.

In the description with reference to FIG. 22, the description of the base station device 2210 may be identically applicable to a relay device as a DL transmission entity or a UL reception entity. And, the description of the user equipment device 2220 may be identically applicable to a relay device as a DL reception entity or a UL transmission entity.

Embodiments of the present invention may be implemented using various means. For instance, embodiments of the present invention can be implemented using hardware, firmware, software and/or any combinations thereof.

In the implementation by hardware, a method according to each embodiment of the present invention can be implemented by at least one selected from the group consisting of ASICs (application specific integrated circuits), DSPs (digital signal processors), DSPDs (digital signal processing devices), PLDs (programmable logic devices), FPGAs (field programmable gate arrays), processor, controller, microcontroller, microprocessor and the like.

In case of the implementation by firmware or software, a method according to each embodiment of the present invention can be implemented by modules, procedures, and/or functions for performing the above-explained functions or operations. Software code is stored in a memory unit and is then drivable by a processor. The memory unit is provided within or outside the processor to exchange data with the processor through the various means known to the public.

The scope of the invention is defined by the independent claims. Preferred embodiments are defined by the dependent claims.

## INDUSTRIAL APPLICABILITY

The embodiments of the present invention mentioned in the foregoing description may be applicable to various kinds of mobile communication systems.

## Claims

1. A method of receiving uplink acknowledgement/negative-acknowledgement, UL ACK/NACK, information by a base station, comprising:

   allocating a plurality of physical uplink control channel, PUCCH, resources for use by a single user equipment (S2110); and
   receiving the UL ACK/NACK information via at least one of the plurality of the PUCCH resources in an UL subframe from the single user equipment (S2120),
   wherein the plurality of the PUCCH resources is configured based on a plurality of first cyclic shifts and a single first orthogonal spreading code,
   wherein each of the plurality of the PUCCH resources allocated for the UL ACK/NACK information of the single user equipment is distinguished based on the first cyclic shifts, and
   wherein the first cyclic shifts are applied to a sequence of a frequency domain for the UL ACK/NACK information carried by each of the plurality of the PUCCH resources, the first orthogonal spreading code is applied to symbol of a time domain for the UL ACK/NACK information carried by each of the plurality of the PUCCH resources.

2. The method of claim 1, wherein the plurality of the PUCCH resources are configured further based on single second orthogonal spreading code and a plurality of second cyclic shifts,

   wherein each of the plurality of the PUCCH resources allocated for a reference signal of the single user equipment is distinguished based on the second cyclic shift, and
   wherein the second cyclic shift is applied to a sequence of the frequency domain for the reference signal carried by each of the plurality of the PUCCH resources, and the second orthogonal spreading code is applied to symbol of the time domain for the reference signal carried by each of the plurality of the PUCCH resources.

3. The method of claim 2, wherein a number of data resources specified by the plurality of first cyclic shifts and the single first orthogonal spreading code is greater than a number of reference signal resources specified by the plurality of second cyclic shifts and the single second orthogonal spreading code.

4. The method of claim 1, wherein the plurality of the PUCCH resources are located on a single resource block.

5. The method of claim 1, wherein the UL ACK/NACK information of the single user equipment is transmitted using all of the plurality of the PUCCH resources used by the single user equipment simultaneously or at least one selected from the plurality of the PUCCH resources allocated to the single user equipment.

6. The method of claim 1, wherein the UL ACK/NACK information transmitted by the single user equipment comprises either the UL ACK/NACK information on a plurality of downlink, DL, data packets via a plurality of DL carriers or the UL ACK/NACK information on the plurality of DL data packets via a plurality of DL subframes.

7. A base station (2210) for receiving uplink acknowledgement/negative-acknowledgement, UL ACK/NACK, information, the base station comprising:

   a transmitting module (2212) configured to transmit a downlink signal to at least one user equipment;
   a receiving module (2211) configured to receive an uplink signal from the at least one user equipment; and
   a processor (2213) configured to control the base station including the receiving module and the transmitting module,
   wherein the processor allocates a plurality of physical uplink control channel, PUCCH, resources to be used by a single user equipment among the at least one user equipment,
   wherein the receiving module receives the UL ACK/NACK information carried on at least one of the plurality of the PUCCH resources in a UL subframe from the single user equipment,
   wherein the plurality of the PUCCH resources is configured based on a plurality of first cyclic shifts and a single first orthogonal spreading code,
wherein each of the plurality of the PUCCH resources allocated for the UL ACK/NACK information of the single user equipment is distinguished based on the first cyclic shifts, and
wherein the first cyclic shifts are applied to a sequence of a frequency domain for the UL ACK/NACK information carried by each of the plurality of the PUCCH resources, the first orthogonal spreading code is applied to symbol of a time domain for the UL ACK/NACK information carried by each of the plurality of the PUCCH resources.

8. A user equipment (2220) for transmitting uplink acknowledgement/negative-acknowledgement, UL ACK/NACK, information, the user equipment comprising:

a transmitting module (2222) configured to transmit an uplink signal to a base station;
a receiving module (2221) configured to receive a downlink signal from the base station; and
a processor (2223) configured to control the user equipment including the receiving module and the transmitting module,
wherein the receiving module receives allocation of a plurality of PUCCH resources from the base station,
wherein the transmitting module transmits the UL ACK/NACK information using at least one of the plurality of the PUCCH resources in a UL subframe to the base station,
wherein the plurality of the PUCCH resources is configured based on a plurality of first cyclic shifts and a single first orthogonal spreading code,
wherein each of the plurality of the PUCCH resources allocated for the UL ACK/NACK information of the single user equipment is distinguished based on the first cyclic shifts, and
wherein the first cyclic shifts are applied to a sequence of a frequency domain for the UL ACK/NACK information carried by each of the plurality of the PUCCH resources, the first orthogonal spreading code is applied to symbol of a time domain for the UL ACK/NACK information carried by each of the plurality of the PUCCH resources.

**Patentansprüche**

1. Verfahren zum Empfangen von Uplink-Acknowledgement/Negative-Acknowledgement, UL ACK/NACK, -Informationen durch eine Basisstation, umfassend:

Zuweisen einer Vielzahl von physikalischen Uplink-Steuerkanal, PUCCH, - Ressourcen zur Verwendung durch ein einzelnes Benutzerendgerät (S2110); und
Empfangen der UL ACK/NACK-Informationen über mindestens eine der Vielzahl der PUCCH-Ressourcen in einem UL-Teilrahmen von dem einzelnen Benutzerendgerät (S2120),
wobei die Vielzahl der PUCCH-Ressourcen auf der Grundlage einer Vielzahl erster zyklischer Verschiebungen und eines einzigen ersten orthogonalen Spreizcodes konfiguriert sind,
wobei jede der Vielzahl der PUCCH-Ressourcen, die für die UL ACK/NACK-Informationen des einzelnen Benutzerendgerät zugewiesen sind, auf der Grundlage der ersten zyklischen Verschiebungen unterschieden wird, und
wobei die ersten zyklischen Verschiebungen auf eine Sequenz einer Frequenzdomäne für die UL ACK/NACK-Informationen angewendet werden, die von jeder der Vielzahl der PUCCH-Ressourcen getragen werden, der erste orthogonale Spreizcode auf ein Symbol einer Zeitdomäne für die UL ACK/NACK-Informationen angewendet wird, die von jeder der Vielzahl der PUCCH-Ressourcen getragen werden.

2. Verfahren nach Anspruch 1, wobei die Vielzahl der PUCCH-Ressourcen ferner auf der Grundlage eines einzelnen zweiten orthogonalen Spreizcodes und einer Vielzahl zweiter zyklischer Verschiebungen konfiguriert sind,

wobei jede der Vielzahl der PUCCH-Ressourcen, die für ein Referenzsignal des einzelnen Benutzerendgeräts zugewiesen sind, auf der Grundlage der zweiten zyklischen Verschiebung unterschieden wird, und
wobei die zweite zyklische Verschiebung auf eine Sequenz der Frequenzdomäne für das von jeder der Vielzahl der PUCCH-Ressourcen getragene Referenzsignal angewendet wird und der zweite orthogonale Spreizcode auf ein Symbol der Zeitdomäne für das von jeder der Vielzahl der PUCCH-Ressourcen getragene Referenzsignal angewendet wird.

3. Verfahren nach Anspruch 2, wobei eine Anzahl von Datenressourcen, die durch die Vielzahl von ersten zyklischen Verschiebungen und dem einzelnen ersten orthogonalen Spreizcode spezifiziert ist, größer ist als eine Anzahl von Referenzsignalressourcen, die durch die Vielzahl von zweiten zyklischen Verschiebungen und den einzelnen zweiten orthogonalen Spreizcode spezifiziert ist.

4. Verfahren nach Anspruch 1, wobei sich die Vielzahl der PUCCH-Ressourcen in einem einzigen Ressourcenblock befinden.

5. Verfahren nach Anspruch 1, wobei die UL ACK/NACK-Informationen des einzelnen Benutzerendgeräts übertragen werden unter Verwendung aller der Vielzahl der PUCCH-Ressourcen, die von dem einzelnen Benutzerendgerät gleichzeitig verwendet werden, oder mindestens einer ausgewählt aus der Vielzahl der PUCCH-Ressourcen, die dem einzelnen Benutzerendgerät zugewiesen sind.

6. Verfahren nach Anspruch 1, wobei die von dem Benutzerendgerät übertragene UL ACK/NACK-Informationen entweder die UL ACK/NACK-Informationen über eine Vielzahl von Downlink, DL, -Datenpaketen über eine Vielzahl von DL-Trägern oder die UL ACK/NACK-Informationen über die Vielzahl von DL-Datenpaketen über eine Vielzahl von DL-Teilrahmen umfasst.

7. Basisstation (2210) zum Empfangen von Uplink-Bestätigungs/Negativ-Bestätigungs, UL ACK/NACK, -Informationen, wobei die Basisstation umfasst:

   ein Sendemodul (2212), das konfiguriert ist, ein Downlink-Signal an mindestens ein Benutzerendgerät zu senden;
   ein Empfangsmodul (2211), das konfiguriert ist, ein Uplink-Signal von dem mindestens einen Benutzerendgerät zu empfangen; und
   einen Prozessor (2213), der konfiguriert ist, die Basisstation einschließlich des Empfangsmoduls und des Sendemoduls zu steuern,
   wobei der Prozessor eine Vielzahl von physikalischen Uplink-Steuerkanal, PUCCH, -Ressourcen zuweist, die von einem einzelnen Benutzerendgerät aus dem mindestens einen Benutzergerät verwendet werden sollen,
   wobei das Empfangsmodul die UL ACK/NACK-Informationen, die auf mindestens einer der Vielzahl der PUCCH-Ressourcen in einem UL-Teilrahmen übertragen werden, von dem einzelnen Benutzerendgerät empfängt,
   wobei die Vielzahl der PUCCH-Ressourcen auf der Grundlage einer Vielzahl erster zyklischer Verschiebungen und eines einzigen ersten orthogonalen Spreizcodes konfiguriert sind,
   wobei jede der Vielzahl der PUCCH-Ressourcen, die für die UL ACK/NACK-Informationen des einzelnen Benutzerendgeräts zugewiesen sind, auf der Grundlage der ersten zyklischen Verschiebungen unterschieden wird, und
   wobei die ersten zyklischen Verschiebungen auf eine Sequenz einer Frequenzdomäne für die UL ACK/NACK-Informationen angewendet werden, die von jeder der Vielzahl der PUCCH-Ressourcen getragen werden, der erste orthogonale Spreizcode auf ein Symbol einer Zeitdomäne für die UL ACK/NACK-Informationen angewendet wird, die von jeder der Vielzahl der PUCCH-Ressourcen getragen werden.

8. Benutzerendgerät (2220) zum Übertragen von Uplink-Bestätigungs/Negativ-Bestätigungs-Informationen, UL ACK/NACK, wobei das Benutzerendgerät umfasst:

   ein Sendemodul (2222), das konfiguriert ist, ein Uplink-Signal an eine Basisstation zu senden;
   ein Empfangsmodul (2221), das konfiguriert ist, dass ein Downlink-Signal von der Basisstation zu empfangen; und
   einen Prozessor (2223), der konfiguriert ist, das Benutzerendgerät einschließlich des Empfangsmoduls und des Sendemoduls zu steuern,
   wobei das Empfangsmodul eine Zuweisung einer Vielzahl von PUCCH-Ressourcen von der Basisstation erhält,
   wobei das Sendemodul die UL ACK/NACK-Informationen unter Verwendung mindestens einer der Vielzahl der PUCCH-Ressourcen in einem UL-Teilrahmen an die Basisstation sendet,
   wobei die Vielzahl der PUCCH-Ressourcen auf der Grundlage einer Vielzahl erster zyklischer Verschiebungen und eines einzigen ersten orthogonalen Spreizcodes konfiguriert sind,
   wobei jede der Vielzahl der PUCCH-Ressourcen, die für die UL ACK/NACK-Informationen des einzelnen Benutzerendgeräts zugewiesen sind, auf der Grundlage der ersten zyklischen Verschiebungen unterschieden wird, und
   wobei die ersten zyklischen Verschiebungen auf eine Sequenz einer Frequenzdomäne für die UL ACK/NACK-Informationen angewendet werden, die von jeder der Vielzahl der PUCCH-Ressourcen getragen werden, der erste orthogonale Spreizcode auf ein Symbol einer Zeitdomäne für die UL ACK/NACK-Informationen angewendet wird, die von jeder der Vielzahl der PUCCH-Ressourcen getragen werden.

**Revendications**

1. Procédé de réception d'informations d'accusé de réception/de réception négatif de liaison montante, UL ACK/NACK, par une station de base, consistant à :

   attribuer une pluralité des ressources de canal physique de contrôle montant, PUCCH, destinées à être utilisées par un équipement utilisateur unique (S2110) ; et
   recevoir les informations ACK/NACK par l'intermédiaire d'au moins la pluralité des ressources PUCCH dans une sous- trame UL provenant de l'équipement utilisateur unique (S2120),
   dans lequel la pluralité des ressources PUCCH est configurée sur la base d'une pluralité de décalages cycliques et d'un premier code d'étalement orthogonal,
   dans lequel chaque ressource de la pluralité des ressources de PUCCH attribuées aux informations UL ACK/NACK de l'équipement utilisateur unique se distingue sur la base des premiers décalages cycliques, et
   dans lequel les premiers décalages cycliques sont appliqués à une séquence d'un domaine fréquentiel pour les informations UL ACK/NACK portées par chaque ressource de la pluralité de ressources PUCCH, le premier code d'étalement orthogonal est appliqué à un symbole d'un domaine temporel pour les informations UL ACK/NACK portées par chaque ressource de la pluralité des ressources PUCCH.

2. Procédé selon la revendication 1, dans lequel la pluralité des ressources de PUCCH sont configurées en outre sur la base d'un seul second code d'étalement orthogonal et d'une pluralité de secondes décalages cycliques,

   dans lequel chaque ressource de PUCCH de la pluralité de PUCCH attribuées à un signal de référence de l'équipement utilisateur unique se distingue sur la base du second décalage cyclique, et
   dans lequel les seconds décalages cycliques sont appliqués à une séquence d'un domaine fréquentiel pour le signal de référence porté par chaque ressource de la pluralité de ressources PUCCH, le second code d'étalement orthogonal est appliqué à un symbole d'un domaine temporel pour le signal de référence porté par chaque ressource de la pluralité des ressources PUCCH.

3. Procédé selon la revendication 2, dans lequel un nombre de ressources de données spécifiées par la pluralité des premiers décalages cycliques et le premier code d'étalement orthogonal unique est supérieure à un nombre de ressources de signal de référence spécifiées par la pluralité des seconds décalages cycliques et le second code d'étalement orthogonal unique.

4. Procédé selon la revendication 1, dans lequel la pluralité des ressources PUCCH sont situées sur un bloc unique de ressources.

5. Procédé selon la revendication 1, dans lequel les informations UL ACK/NACK de l'équipement utilisateur unique sont transmises à l'aide de toutes les ressources de la pluralité de ressources de PUCCH utilisées par l'équipement utilisateur unique simultanément ou au moins une ressource sélectionnée dans la pluralité des ressources de PCCH attribuées à l'équipent utilisateur unique.

6. Procédé selon la revendication 1, dans lequel les informations UL ACK/NACK transmises par l'équipement utilisateur unique comprennent soit les informations UL ACK/NACK sur une pluralité de paquets de données descendantes, DL, par l'intermédiaire d'une pluralités de porteuses DL soit les informations UL ACK/NACK sur la pluralité de paquets de données DL par l'intermédiaire d'une pluralité de soustrames DL.

7. Station de base (2210) destinée à recevoir des informations d'accusé de réception/de réception négatif de liaison montante, UL ACK/NACK, la station de base comprend :

   un module de transmission (2212) conçue pour transmettre un signal descendant à au moins un équipement utilisateur ;
   un module de réception (2211) conçue pour recevoir un signal montant en provenance de l'au moins un équipement utilisateur ; et
   un processeur (2213) configuré pour commander la station de base y compris le module de réception et le module de transmission ,
   dans lequel le processeur attribue une pluralité de ressources de canal physique de contrôle montant, PUCCH, à utiliser par un équipement utilisateur unique parmi l'au moins un équipement utilisateur,
   dans laquelle le module de réception reçoit les informations ACK/NACK portées sur au moins une ressource de la pluralité des ressources de PUCCH dans une soustrame UL provenant de l'équipement utilisateur unique, la pluralité des ressources PUCCH est configurée sur la base d'une pluralité de décalages cycliques et d'un premier code d'étalement orthogonal,

chaque ressource de la pluralité des ressources de PUCCH attribuées aux informations UL ACK/NACK de l'équipement utilisateur unique se distingue sur la base des premiers décalages cycliques, et

dans lequel les premiers décalages cycliques sont appliqués à une séquence d'un domaine fréquentiel pour les informations UL ACK/NACK portées par chaque ressource de la pluralité de ressources PUCCH, le premier code d'étalement orthogonal est appliqué à un symbole d'un domaine temporel pour les informations UL ACK/NACK portées par chaque ressource de la pluralité des ressources PUCCH.

8. Équipement utilisateur (2220) destiné à transmettre des informations d'accusé de réception/de réception négatif de liaison montante, UL ACK/NACK, l'équipement utilisateur comprend :

un module de transmission (2222) conçu pour émettre un signal montant à la station de base ;

un module de réception (2221) conçue pour recevoir un signal descendant en provenance de la station de base ; et

un processeur (2223) configuré pour commander l'équipement utilisateur y compris le module de réception et le module de transmission,

dans lequel le module de réception reçoit l'attribution d'une pluralité de ressources de PUCCH en provenance de la station de base,

dans laquelle le module de transmission transmet les informations ACK/NACK à l'aide d'au moins une ressource de la pluralité des ressources de PUCCH dans une sous- trame UL à la station de base,

la pluralité des ressources PUCCH est configurée sur la base d'une pluralité de décalages cycliques et d'un premier code d'étalement orthogonal,

chaque ressource de la pluralité des ressources de PUCCH attribuées aux informations UL ACK/NACK de l'équipement utilisateur unique se distingue sur la base des premiers décalages cycliques, et

dans lequel les premiers décalages cycliques sont appliqués à une séquence d'un domaine fréquentiel pour les informations UL ACK/NACK portées par chaque ressource de la pluralité de ressources PUCCH, le premier code d'étalement orthogonal est appliqué à un symbole d'un domaine temporel pour les informations UL ACK/NACK portées par chaque ressource de la pluralité des ressources PUCCH.

# FIG. 1

Radio frame

| | | | | | |
|---|---|---|---|---|---|
| #0 | #1 | #2 | ... | #18 | #19 |

Slot

Subframe

(a)

One radio frame, $T_S = 307200T = 10ms$

One half frame, $T_S = 153600T = 5ms$

One slot
$T_{slot} = 15360T_S$

$30720T_S$

| Subframe#0 | | | | Subframe#2 | Subframe#3 | Subframe#4 | Subframe#5 | | | | Subframe#7 | Subframe#8 | Subframe#9 |

One subframe,
$30720T_S$

DwPTS   GP   UpPTS

DwPTS   GP   UpPTS

(b)

EP 2 566 087 B1

# FIG. 2

One downlink slot

7 OFDM symbols

$N^{DL} \times 12$ subcarriers

12 subcarriers

Resource block
$12 \times 7$ resource elements

Resource elements

# FIG. 3

Control region          Data region

First slot          Second slot

Frequency

One subframe

Time

# FIG. 4

Control region

Data region

RB pair

One slot    One slot

Frequency

Subframe

Time

# FIG. 5

FIG. 6

EP 2 566 087 B1

# FIG. 7

# FIG. 8

FIG. 9

# FIG. 10

PDCCH monitoring DL cell

DL cell A

DL cell B

DL cell C

PDCCH

PDSCH

Subframe

CIF

CIF

CIF

# FIG. 11

FIG. 12

PUCCH transmission resource #0

PUCCH transmission resource #1

'0'

'1'

1 Slot

A/N    RS    A/N

PUCCH format 1b channel (including 2 bit A/N)

Expression of A/N of additional 1 bit

# FIG. 13

|  | OC1 | OC2 | OC3 |
|---|---|---|---|
| CS1 |  |  |  |
| CS2 |  |  |  |
| CS3 |  |  |  |
| CS4 |  |  |  |
| CS5 |  |  |  |
| CS6 |  |  |  |
| CS7 |  |  |  |
| CS8 |  |  |  |
| CS9 |  |  |  |
| CS10 |  |  |  |
| CS11 |  |  |  |
| CS12 |  |  |  |

(a) RS part

|  | OC1 | OC2 | OC3 | OC4 |
|---|---|---|---|---|
| CS1 |  |  |  |  |
| CS2 |  |  |  |  |
| CS3 |  |  |  |  |
| CS4 |  |  |  |  |
| CS5 |  |  |  |  |
| CS6 |  |  |  |  |
| CS7 |  |  |  |  |
| CS8 |  |  |  |  |
| CS9 |  |  |  |  |
| CS10 |  |  |  |  |
| CS11 |  |  |  |  |
| CS12 |  |  |  |  |

(b) Data part

# FIG. 14

|  | OC1 | OC2 | OC3 |
|---|---|---|---|
| CS1 | // | // | // |
| CS2 |  |  |  |
| CS3 |  |  |  |
| CS4 |  |  |  |
| CS5 |  |  |  |
| CS6 |  |  |  |
| CS7 |  |  |  |
| CS8 |  |  |  |
| CS9 |  |  |  |
| CS10 |  |  |  |
| CS11 |  |  |  |
| CS12 |  |  |  |

(a) RS part

|  | OC1 | OC2 | OC3 | OC4 |
|---|---|---|---|---|
| CS1 | // | // | // | // |
| CS2 |  |  |  |  |
| CS3 |  |  |  |  |
| CS4 |  |  |  |  |
| CS5 |  |  |  |  |
| CS6 |  |  |  |  |
| CS7 |  |  |  |  |
| CS8 |  |  |  |  |
| CS9 |  |  |  |  |
| CS10 |  |  |  |  |
| CS11 |  |  |  |  |
| CS12 |  |  |  |  |

(b) Data part

# FIG. 15

(a) RS part

(b) Data part

# FIG. 16

(a) RS part

(b) Data part

# FIG. 17

(a) RS part

(b) Data part

# FIG. 18

(a) RS part

(b) Data part

# FIG. 19

|      | OC1 | OC2 | OC3 |
|------|-----|-----|-----|
| CS1  | /// |     |     |
| CS2  |     |     |     |
| CS3  | /// |     |     |
| CS4  |     |     |     |
| CS5  |     |     |     |
| CS6  | /// |     |     |
| CS7  |     |     |     |
| CS8  |     |     |     |
| CS9  |     |     |     |
| CS10 |     |     |     |
| CS11 |     |     |     |
| CS12 |     |     |     |

(a) RS part

|      | OC1 | OC2 | OC3 | OC4 |
|------|-----|-----|-----|-----|
| CS1  |     |     | /// |     |
| CS2  |     |     |     |     |
| CS3  |     |     | /// |     |
| CS4  |     |     |     |     |
| CS5  |     |     | /// |     |
| CS6  |     |     |     |     |
| CS7  |     |     | /// |     |
| CS8  |     |     |     |     |
| CS9  |     |     |     |     |
| CS10 |     |     |     |     |
| CS11 |     |     |     |     |
| CS12 |     |     |     |     |

(b) Data part

# FIG. 20

|      | OC1 | OC2 | OC3 |
|------|-----|-----|-----|
| CS1  | UE1 |     | UE2 |
| CS2  |     |     |     |
| CS3  |     |     |     |
| CS4  |     |     |     |
| CS5  |     |     |     |
| CS6  |     |     |     |
| CS7  |     |     |     |
| CS8  |     |     |     |
| CS9  |     |     |     |
| CS10 |     |     |     |
| CS11 | UE3 |     |     |
| CS12 |     |     |     |

(a) RS part

|      | OC1 | OC2 | OC3 | OC4 |
|------|-----|-----|-----|-----|
| CS1  | UE1 | UE3 |     | UE2 |
| CS2  | UE1 | UE3 |     | UE2 |
| CS3  | UE1 |     |     | UE2 |
| CS4  | UE1 |     |     | UE2 |
| CS5  |     |     |     |     |
| CS6  |     |     |     |     |
| CS7  |     |     |     |     |
| CS8  |     |     |     |     |
| CS9  |     |     |     |     |
| CS10 |     |     |     |     |
| CS11 | UE3 |     |     |     |
| CS12 | UE3 |     |     |     |

(b) Data part

# FIG. 21

| Base Station (eNB) | User Equipment (UE) |
|---|---|
| S2110 — Transmit allocation information on a plurality of UL ACK/NACK transmission resources to each of at least one user equipment | Receive allocation information on a plurality of UL ACK/NACK transmission resources — S2130 |
| S2120 — Receive UL ACK/NACK information from each of at least one user equipment on a plurality of UL ACK/NACK transmission resources | Transmit UL ACK/NACK information using a plurality of allocated UL ACK/NACK transmission resources — S2140 |

# FIG. 22

2210 eNB

2215

2212 Transmission module

2214 Memory

2213 Processor

2211 Reception module

2225

2223 Processor

2222 Transmission module

2224 Memory

2221 Reception module

2220 UE

**EP 2 566 087 B1**

## REFERENCES CITED IN THE DESCRIPTION

### Patent documents cited in the description

- US 20090196229 A1